# EUROPEAN PATENT APPLICATION

(11) **EP 1 781 031 A1**
(43) Date of publication of application: **02.05.2007**
(21) Application number: 05762055.1
(22) Date of filing: 19.07.2005
(51) Int. Cl.: H04N 7/14, G06Q 50/00, H04M 11/00

(54) **VIDEO TELEPHONE POLICE STATION SYSTEM**

(30) Priority: 11.08.2004 JP 2004234137
(71) Applicant: Ginganet Corporation, Tennoji-ku Osaka-shi Osaka 5430001 (JP)
(72) Inventor: SAHASHI, Nozomu, Kishiwada-shi, Osaka 5960045 (JP)
(74) Representative: Schoppe, Fritz
(86) International application number: PCT/JP2005/013260
(87) International publication number: WO 2006/016466

(57) **Abstract**

A videophone police box system capable of enabling a small number of police officers to handle a large number of visitors by separating emergency calls and usual receptions, and by enabling investigation record creating duties in the usual reception to be performed without handling by a police officer is provided. In a police box, a police box terminal 12, a visitor sensor 14, a found article storage 17 and other suitable components are provided. In a videophone reception center 100, a reception server 110, an automatic answering server 120, an MCU 130, and a reception terminal 140 are provided. These components are connected to each other via a communication line 600. The police box terminal is provided with an emergency call button and a usual reception button. In the case of the usual reception, the reception server connects the police box terminal to the automatic answering server, sequentially retrieves question videos from an investigation record file and sends them to the police box terminal, acquires an answer video or character-based information in response to each question video to create an investigation record automatically. In the case of the emergency call, the reception server includes a function for calling a low-priority reception terminal and connecting the emergency call to the same even if all the reception terminals are connected.

## Description

### TECHNICAL FIELD

The present invention relates to a videophone police box system that provides police services in an unmanned police box (KOBAN) in which a videophone terminal is installed.

### BACKGROUND ART

In Japan, a "KOBAN" where a police officer resides to protect the safety of citizens is maintained in many regions across the country. If a citizen has encountered trouble, e.g., lost his/her wallet, got lost, or had an accident, he/she can consult face-to-face with a police officer anytime when he/she goes to a "KOBAN". Thus, the "KOBAN" serves as a center for local safety.
However, it is difficult to provide a police officer in every one of a large number of "KOBAN" in many regions across the country from a viewpoint of manpower. Especially, when a police officer who is responsible for a "KOBAN" leaves the "KOBAN" to perform a patrol, the "KOBAN" is inevitably unoccupied. Therefore, it is difficult to ensure public trust that a police officer always be present in any given "KOBAN".

In recent years, the performance of videophones that allow two-way audio visual communication via a communication line has rapidly improved. Based on this trend, in recent years, videophone terminals, which enable a visitor to remotely consult with a police officer in a major police station, have been installed in the "high-tech KOBAN" for assisting the public when no police officer is on duty in the "high-tech KOBAN" (see Non-patent Reference 1, for example).
The videophone terminal in the "high-tech KOBAN" includes an "EMERGENCY" button and a "TALK" button. When a person presses the "EMERGENCY" button, an emergency message is sent to an officer in a major police station. While the officer provides consultation to the person over the videophone, he/she can perform an emergency response, such as immediately dispatching a patrol team, if necessary. When a person presses the "TALK" button, the person can consult with an officer in a major police station over the videophone and make various reports and consultations. The videophone terminal also includes an automatic responding function using a computer so that a route and various other procedures can be provided without the consultation with an officer.
In this manner, a citizen can go to a nearby "KOBAN" when encountering trouble and consult with a police officer over the videophone, so as to enable the police box to serve as a center for local safety.
Patent Reference 1 discloses a "KOBAN system" that connects a terminal in a police box to a terminal in a major police station via a communication line, and remotely provides police box services using an audio visual interface. When someone visits the police box when a police officer is absent, the terminal of the police box is automatically connected to a terminal in a major police station, by which an officer in a major police station can respond to the visitor.

[Non-patent Reference 1] "High-tech KOBAN" by Tokyo Metropolitan Police Department (online), (searched on May 28, 2004) Internet <URL: http://www.keishicho.metro.tokyo.jp/sikumi/kouban/haiteku.htm >
[Patent Reference 1] Japanese Patent Laid-Open Publication No. Hei 3-191470

### DISCLOSURE OF THE INVENTION

### PROBLEMS TO BE SOLVED BY THE INVENTION

However, in the aforementioned conventional high-tech police box, it is necessary for an officer in a major police station to actually respond to a visitor by a videophone, except for services with which the visitor can perform an inquiry on one's own, e.g., route guidance and guides for some procedures. Thus, when many people visit the high-tech police box, all of the officers may be busy and not available because of a limited number of officers who are available to respond to the visitors. Thus, there may be occasions when no officer is available to respond to an emergency call.

Moreover, services provided by a police officer in a police box, such as the filing of an incident information report, a found article report, a lost article report, a missing person search request, a traffic accident report, and etc., are not urgent. However, it is still necessary for the police officer to create an investigation record in order to file the case.
In addition, in the conventional high-tech police box, it takes a long time to create an investigation record because a police officer creates it by interviewing each visitor. When one officer is occupied by one visitor for a long time while many people seek help at the high-tech police box, all of the officers may be busy and not available because of a limited number of officers who can actually respond to the visitors. In such a case, a problem arises in that no officer can respond to an emergency call.

It is therefore an objective of the present invention to provide a videophone police box system capable of enabling a small number of police officers to handle a large number of visitors by separating emergency calls from usual inquiries, and by enabling an investigation record of the usual inquiries, to be performed without actually being handled by a police officer.

### MEANS FOR SOLVING THE PROBLEMS

A videophone police box system according to a preferred embodiment of the present invention for connecting a police box terminal having a videophone function that is installed in a police box to a reception terminal having a videophone function that is installed in a headquarters or other suitable police facility via a communication line to enable a visitor to the police box to remotely consult with a police officer in the headquarters or other suitable police facility. The videophone police box system includes a reception unit that receives a call from the police box terminal, and an automatic investigation record creating unit that includes an investigation record file in which a question video is recorded for each investigation item in an investigation record created by a police officer, that is connected to the police box terminal accepted by the reception unit, and that includes a function of sequentially retrieving the question video in accordance with an investigation item from the investigation record file and sending the question video to the connected police box terminal and a function of acquiring an answer video in response to the sent video from the connected police box terminal and recording the answer video into the investigation record file to correspond to the investigation item. The reception unit connects the police box terminal to the automatic investigation record creating unit when accepting a usual call from the police box terminal, which consequently eliminates a need for handling by a police officer at a reception terminal. The reception unit connects the police box terminal to a reception terminal capable of responding when accepting an emergency call from the police box terminal, which enables a police officer to respond to an emergency.
Since the automatic investigation record creating unit includes an investigation record file in which a question video is recorded for each investigation item and includes functions of sequentially retrieving a question video in accordance with an investigation item from the investigation record file, sending the question video to the connected police box terminal, acquiring an answer video to the question video from the police box terminal, and recording the answer video into the investigation record file corresponding to the investigation item, an investigation record can be automatically created without requiring a police officer to handle a visitor to a police box by connecting a police box terminal with a videophone function to the automatic investigation record creating unit. Moreover, since the automatic investigation record creating unit includes a function of giving a question to the visitor by both video and audio, it is possible to handle a sight-impaired or hearing-impaired visitor. In addition, since a facial expression of the visitor is recorded together with his/her voice in the investigation record file, when the investigation record file is used, the recorded video can be reviewed to determine the credibility of his/her statement even when his/her recorded voice is difficult to assess based only on his/her recorded voice.
Moreover, since the reception unit separates a usual call from an emergency call, which facilitates the reception unit to connect the police box terminal to the automatic investigation record creating unit when receiving a usual call from a police box terminal, a police officer of a reception terminal does not have to respond, and an investigation record is automatically created without assistance from the police officer. On the other hand, since the reception unit connects an emergency call to a reception terminal when receiving the emergency call from a police box terminal, a police officer is available to make an emergency response. In this manner, the videophone police box system can handle a large number of visitors with a small number of officers:

In the videophone police box system, the investigation record file may include a relevant department field in which information regarding a department that is relevant to each investigation record file is set and a character-based information field in which character-based information is registered for each investigation item. The reception unit may include a function of accepting an access to an investigation record file from the reception terminal or a relevant department's terminal connected via the communication line and setting information regarding a department that is relevant to the investigation record file into the relevant department field in the investigation record file. The automatic investigation record creating unit may include a function of converting audio of an answer video from a connected police box terminal into character-based information by speech recognition, a function of recording the converted character-based information into a character-based information field for a corresponding investigation item, and a function of calling and connecting a relevant department's terminal based on information set in a relevant department field of an investigation record file, when the investigation record file satisfies a predetermined condition for correspondence between information recorded in a character-based information field of the new investigation record file and information recorded in a character-based information field in investigation record files which are already registered.
Since preferred embodiments of the present invention may include an investigation record file with a character-based information field for each investigation item and may include a function of converting an answer audio from a police box terminal into character-based information by speech recognition and a function of recording the converted character-based information into the investigation record file, a keyword search using the converted character-based information may be performed and the similarity with other investigation record files or other crime information may be determined.
Moreover, since preferred embodiments of the present invention may also include the investigation record file with a relevant department field in which information regarding a department that is relevant to the investigation record is recorded and may include a function of calling and connecting the relevant department's terminal based on information set in a relevant department of an investigation record file when the investigation record file satisfies a predetermined condition for correspondence between information recorded in a character-based information field of the new investigation record file and information in a character-based information field in investigation record files which are already registered, when there is a registered investigation record in which a case related to a filed investigation record is recorded, a department that is relevant to the case may interview a filing person over the videophone so as to confirm the details, thus contributing to rapid resolution of the case.

In the videophone police box system, the automatic investigation record creating unit may include a function of acquiring character-based information input at the police box terminal and a function of, when character-based information is acquired in response to the sent question video, recording the acquired character-based information into a character-based information field for a corresponding investigation item.
According to preferred embodiments of the present invention, it is possible to answer the question video by using character-based information about the police box terminal and handle an orally challenged person. Moreover, any of an answer in characters and an answer by video can be used. Therefore, both the answer in characters and the answer by video can be used, as a particular situation demands. For example, information that should be precisely input is input in characters, and a complicated event is answered by an audio.

In the videophone police box system, the automatic investigation record creating unit may include a function of activating an image acquiring application that acquires an image from a digital camera, a mobile phone, or other suitable device brought by a visitor to a police box terminal and transfers the image, a function of recording the image transferred from the police box terminal by the image acquiring application into the investigation record file, and a function of calling and connecting a relevant department's terminal based on information set in a relevant department field of the extracted investigation record file when an investigation record file satisfying a predetermined condition for correspondence is extracted by comparing an image recorded in a new investigation record file with an image recorded in investigation record files already registered when the new investigation record is registered.
Since preferred embodiments of the present invention may include a function of recording image data that is acquired and transferred from a digital camera, a mobile phone, or other suitable device brought by a visitor to a police box terminal into the investigation record file, it is possible to record image data of a victim, an assailant, and/or situations at the site brought by the filing person into an investigation record file, thus a significantly effective investigation record can be automatically created.
The image acquiring application activated in the police box terminal may acquire image data while the digital camera or the mobile phone is cable-connected to the police box terminal. Alternatively, in the case of a digital camera or a mobile phone having a radio communication function using Bluetooth (registered trademark), for example, or an infrared communication function, image data may be acquired by a wireless communication with the police box terminal.
Moreover, since preferred embodiments may include a function of calling and connecting a relevant department's terminal based on relevant department information set in the found investigation record file when an investigation record file satisfying a predetermined condition for correspondence is found by comparing an image recorded in a new investigation record file with an image recorded in existing investigation record files when the new investigation record file is created, if there is a registered investigation record in which a case relevant to a filed investigation record is recorded, a department relevant to the case can interview the filing person by videophone to obtain details, thus facilitating rapid resolution of the case.
As an image comparison method, a method can be used in which biometric information is extracted from two face images, and the biometric information extracted from one face image and that extracted from the other face image are compared with each other, for example.
The image to be compared may be not only image data from the digital camera or the mobile phone brought by the visitor, but also image data created by a montage application, a drawing application, or other suitable application. Moreover, feature information such as a shape and a color may be extracted from those images recorded in investigation record files so as to be compared.

In the videophone police box system, the automatic investigation record creating unit may include a function of capturing a video image from the police box terminal as a still image, a function of recording the captured image into the investigation record file, and a function of calling and connecting a relevant department's terminal based on information set in a relevant department field of the extracted investigation record file when an investigation record file satisfying a predetermined condition for correspondence is extracted by comparing an image recorded in a new investigation record file with an image recorded in investigation record files already registered when the new investigation record file is registered.
Since preferred embodiments of the present invention may include functions of capturing a video image from a police box terminal as a still image and recording it into the investigation record file, it is possible to record a photograph of a victim, an assailant, an illustration of a site, and other suitable information presented by a filing person to a video camera of the police box terminal, thus a significantly effective investigation record is automatically created.
Moreover, since preferred embodiments may include a function of calling and connecting a relevant department's terminal based on relevant department information set in the found investigation record file when an investigation record file satisfying a predetermined condition for correspondence is found by comparing an image recorded in a new investigation record file with an image recorded in existing investigation record files when the new investigation record file is created, if there is a registered investigation record in which a case that is relevant to a filed investigation record is recorded, a department that is relevant to the case can interview the filing person by videophone to obtain details, thus facilitating rapid resolution of the case.

In the videophone police box system, the reception unit may include a function of accepting a call from the police box terminal that is creating an investigation record file by the automatic investigation record creating unit and connecting the police box terminal to a reception terminal capable of responding.
Since preferred embodiments may include a function of calling a reception terminal capable of responding from a police box terminal and connecting the reception terminal during creation of an investigation record file by the automatic investigation record creating unit, a visitor can consult with an officer of a reception center by calling the reception center using, for example, a help button, if the visitor does not know an operation manner or would like to consult with the police officer, then the officer can complete the investigation record while listening to the visitor, by opening the investigation record file from the reception terminal.

In the videophone police box system, the reception unit may include a reception table in which a police box terminal from which a call is accepted and a reception terminal that is connected to the police box terminal are registered. The reception unit may also include a function of, when accepting a call from a police box terminal, referring to the reception table when there is an unconnected reception terminal, and connecting the police box terminal from which the call is accepted to any of the unconnected reception terminals. The reception table may include a priority field in which priority of a registered police box terminal is set based on information from a reception terminal. The reception unit may also include a function of, when accepting a call from a police box terminal, referring to the priority field in the reception table even when all reception terminals are connected, calling a reception terminal connected to a police box terminal having lower priority when there is a police box terminal having lower priority than that of the police box terminal from which the call is received, holding a connection with the police box terminal connected to the reception terminal from which a responding notification is received, switching the connection with the police box terminal into a connection with the police box terminal from which the call is accepted when the responding notification is received from the called reception terminal, and releasing, when an end notification is received from the reception terminal from which the responding notification is received, the held connection with the police box terminal to recover the connection with the reception terminal.
According to preferred embodiments of the present invention, it is possible to set the priority of a police box terminal that is currently accepted in the reception table in which an accepting state of a police box terminal is registered. Even if all reception terminals are busy when a call is accepted from a police box terminal, it is possible to make a reception terminal that is connected to the police box terminal having the lower priority temporarily deal with the police box terminal from which the call is accepted, when there is a police box terminal having lower priority than that of the police box terminal from which the call is accepted. Therefore, the videophone police box system which enables a smaller number of officers to handle a larger number of visitors is provided.
A call from a police box terminal may include a call from a police box terminal that is creating an investigation record file by the automatic investigation record creating unit, as well as an emergency call. In this case, higher priority is given to a police box terminal from which an emergency call is accepted and lower priority is given to a police box terminal that is creating an investigation record file by the automatic investigation record creating unit. Thus, it is possible to appropriately deal with a call in accordance with a level of emergency.
In addition, the reception terminal for handling the police box terminal from which the call is accepted may be arranged to select a police box terminal having lowest priority.

In the videophone police box system, the automatic investigation record creating unit may include a function of automatically creating at least one of a damage report, an incident information report, a missing person search request, and a traffic accident report as the investigation record file and a function of registering the created investigation record file into a crime information database. The automatic investigation record creating unit may also include a function of calling and connecting a relevant department's terminal based on information set in a relevant department field in the investigation record file when an investigation record file satisfying a predetermined condition for correspondence is extracted by comparing the created investigation record file with another investigation record file registered into the crime information database.
According to preferred embodiments of the present invention, at least one of a damage report, an incident information report, a missing person search report, and a traffic accident report can be automatically created by the automatic investigation record creating unit, and the created investigation record file is automatically registered into the crime information database.
Moreover, since preferred embodiments may include a function of calling and connecting the terminal of the department that is relevant to the found crime information when crime information satisfying a predetermined condition for correspondence is found by comparing the created investigation record file with an investigation record files already registered in the crime information database, the department that is relevant to the case can interview a filing person by videophone to obtain details when there is a registered investigation record in which a case that is relevant to a filed investigation record is recorded, thus facilitating rapid resolution of the case.
In addition, a traffic accident report automatically created by the automatic investigation record creating unit may be automatically registered into a driver's license information database. In this case, it is possible to obtain a record of traffic accidents of a driver's license holder and reflect that record upon license renewal.

In the videophone police box system, the automatic investigation record creating unit may include a function of automatically creating a wanted person information report as the investigation record file, wherein the function includes a function of acquiring search information for searching a wanted person, a function of extracting wanted person information from a crime information database based on the acquired search information and presenting the extracted and a function of selecting a wanted person as an object from the wanted person information thus presented, and a function of registering the wanted person information report thus created into the crime information database. The automatic investigation record creating unit may also include a function of calling and connecting a relevant department's terminal based on information set in a relevant department field of an investigation record file in which the selected wanted person is registered.
According to preferred embodiments, a wanted person can be extracted from the crime information database based on the search information acquired from a filing person, such that a wanted person information report can be automatically created, and then the wanted person report thus created is automatically registered into the crime information database.
Furthermore, since preferred embodiments may include a function of calling and connecting a terminal of a relevant department set in the investigation record file in which the wanted person that is extracted is registered, the department that is relevant to the wanted person can directly interview a filing person to obtain details, thus facilitating rapid arrest of the wanted person.

In the videophone police box system, a found article imaging unit that obtains an image of a found article that is brought and a found article storage unit arranged to store the found article may be connected to the police box terminal. The automatic investigation record creating unit may include a function of automatically creating a found article report as the investigation record file, wherein the function includes a function of acquiring the image of the found article obtained by the found article imaging unit and recording the acquired image into the investigation record file and a function of confirming that the found article is stored in the found article storage and recording storage information, and a function of registering the found article report thus created into a lost-and-found article database. Moreover, the automatic investigation record creating unit may also include a function of automatically creating a lost article report as the investigation record file and a function of registering the lost article report thus created into the lost-and-found article database. The automatic investigation record creating unit may also include a function of, when a lost article report satisfying a predetermined condition for correspondence is extracted by comparing the found article report thus created with lost article reports registered in the lost-and-found article database, notifying a police box terminal accepting the lost article report or a mobile terminal of a police officer having jurisdiction over a police box accepting the lost article report or a terminal of the lost-and-found article center, and a function of referring to storage information in the found article report, calling and connecting a jurisdiction terminal when a found article report satisfying a predetermined condition for correspondence is extracted by comparing the lost article report thus created with found article reports registered in the lost-and-found article database.
Since the police box includes found article imaging unit that obtains an image of a found article brought to the police box, and the image of the found article obtained by the found article imaging unit is recorded into an investigation record file, the found article that is reported can be easily confirmed from any terminal connected to the communication line.
Moreover, since the police box includes a found article storage for storing a found article brought to the police box and the storage information is recorded into an investigation record file after confirming that the filing person stores the found article into the found article storage, the found article can be accepted even if the police box is unoccupied.
In addition, since preferred embodiments of the present invention may include a function of notifying a police box terminal accepting the lost article report, a mobile terminal of a police officer having jurisdiction over the police box accepting the lost article report, or a terminal of the lost-and-found article center when a lost article report satisfying a predetermined condition for correspondence is extracted by comparing the found article report thus created with lost article reports already registered, the jurisdiction police officer can confirm details of the report and contact the filing person of the lost article report quickly.
Furthermore, according to preferred embodiments of the present invention, since it may include a function of referring to storage information in the found article report thus found, calling and connecting the jurisdiction terminal in the case where a found article report satisfying a predetermined condition for correspondence is found by comparing the lost article report thus created with found article reports already registered, a jurisdiction police officer can interview with the filing person of the lost article report so as to obtain details while displaying the found article report, or can present the found article to the police box terminal so as to confirm the same by the filing person of the lost article report, thus it is possible to hand the found article over to a person who lost that article rapidly.

In the videophone police box system, the lost-and-found article center for managing a lost and found article may include a lost-and-found article storage for storing a found article brought from a police box. The reception unit may include a function of, when a found article stored in the found article storage in the police box is transferred into the lost-and-found article storage of the lost-and-found article center, updating storage information in the found article report registered in the lost-and-found article database to the lost-and-found article center.
Since the lost-and-found article center for managing a lost and found article includes a lost-and-found article storage unit arranged to store a found article brought from the police box and the found article can be finally stored in the lost and found article center, in each police box it is only necessary to provide a temporary found article storage.
Moreover, since the storage information of the found article report is updated when the found article is transferred from the found article storage in the police box to the lost-and-found article storage in the lost-and-found article center, a place where the found article is stored can be easily checked from a terminal connected to a communication line and the found article can be returned to the person who lost that article.
Incidentally, a storage section for storing each found article that is brought separately from another found article may be included in the found article storage in the police box or the lost-and-found article storage of the lost-and-found article center, and the storage section may be recorded together with a storage of the found article in the storage information in the found article report. In this case, when a found article report satisfying a predetermined condition for correspondence is found based on a lost article report, a found article that is the subject of the found article report can be quickly picked up and presented to the other end.

In the videophone police box system, the automatic investigation record creating unit may include a function of acquiring license information of a visitor from a police box terminal, a function of confirming that the visitor is required to renew their license by checking the acquired license information against a license information database, a function of acquiring an image of the visitor by capturing a video image on the police box terminal as a still image, a function of confirming identity by checking the acquired image of the visitor against the license information database, a function of performing an eye test by presenting an eye test chart on the police box terminal, a function of sending a course video for license renewal to the police box terminal when it is confirmed that the visitor passes the eye test, and a function of confirming that the sent course video is watched and issuing a license, thereby enabling license renewal to be performed from the police box terminal.
Since the automatic investigation record creating unit may include a function of acquiring license information of a visitor, a function of confirming the identity of the visitor by acquiring a still image from a video image and checking the still image against the license information database, a function of performing an eye test for an object person of license renewal, and a function of presenting a course video for license renewal to a person who passes the eye test, it is possible to perform a license renewal procedure from an empty police box.

In the videophone police box system, the function of confirming identity may include a function of calling and connecting a terminal of a driver's license center when it is impossible to confirm the identity based on the acquired image of the visitor, thereby enabling an officer at the driver's license center to confirm identity.
Since the officer of the driver's license center can confirm the identity when the automatic investigation record creating unit cannot confirm the identity and perform the license renewal procedure even if automatic confirmation of the identity based on a video image is difficult, it is possible to process a large number of license renewal procedures without placing a heavy burden on the officer at the driver's license center.

In the videophone police box system, the automatic investigation record creating unit may include a function of acquiring destination information such as a location name or a name from a police box terminal, a function of searching the acquired destination information in a map information database to acquire route information from the police box to the destination, and a function of presenting the acquired route information to the police box terminal, thereby enabling the police box terminal to perform route guidance.
Since the automatic investigation record creating unit may include a function of acquiring destination information such as a location name or a name, a function of searching a route to a destination from the map information database, and a function of showing the searched route on the map on the police box terminal, it is possible to appropriately perform route guidance without a response from an officer of the reception center.

In the videophone police box system, the automatic investigation record creating unit may include a function of presenting a candidate list for an election to a police box terminal, a function of enabling a candidate for which a speech video is to be watched to be selected from the presented candidate list, a function of sending the speech video of the selected candidate to the police box terminal, a function of acquiring voter information from the police box terminal, a function of confirming a right to vote by checking the acquired voter information against a voter information database, a function of accepting a vote from the police box terminal when the right to vote is confirmed, and a function of registering the accepted vote into a vote information database, thereby enabling an election to be performed through the police box terminal.
Since speech video of a candidate can be watched on a police box terminal during an announced campaign period or on an election day and a vote can be accepted after the right to vote of a visitor is checked against the election information database in the police box terminal, it is possible to officially announce an election or accept a vote by using a local police box and the necessity of setting up a signboard and providing a voting station in every election can be eliminated, thus substantially reducing the public expense required for an election.

In the videophone police box system, the reception unit may include a function of opening an investigation record file from the reception terminal and a function of recording a video image received from the police box terminal into the opened investigation record file, while the reception terminal is connected to the police box terminal by videophone, thereby enabling an officer of the reception terminal to create the investigation record file by interviewing a visitor to the police box terminal by videophone.
Since the videophone police box system may include a function of opening an investigation record file from a reception terminal while the reception terminal is connected to a police box terminal by videophone, and a function of recording a video image from the police box terminal into the investigation record file, an officer of the reception terminal can create the investigation record while interviewing the visitor by videophone, even when an emergency call is received or a visitor who does not know how to operate the terminal requests a consultation.

In the videophone police box system, the reception unit may include a function of activating an image acquiring application that acquires an image from a digital camera, a mobile phone, or other suitable device provided by a visitor at a police box terminal and transfers the acquired image, and a function of recording the transferred image from the police box terminal by the activated image acquiring application into the investigation record file, thereby enabling an officer of the reception terminal to record image data provided by a visitor to the police box terminal into the investigation record file while interviewing the visitor by videophone.
Since the videophone police box system may include a function of receiving image data that is acquired and transferred by an image acquiring application activated in the police box terminal from a digital camera, a mobile phone, or the like brought by a visitor and a function of recording the image data into an investigation record file, an officer of the reception terminal can record the image data provided by a filing person into the investigation record file by interviewing the visitor to the police box terminal by videophone.

In the videophone police box system, the reception unit may include a function of capturing a video image from a police box terminal as a still image and a function of recording the captured image into the investigation record file, thereby enabling an officer of the reception terminal to record an image presented by a visitor to the police box terminal to a video camera into the investigation record file while interviewing the visitor by videophone.
Since the videophone police box system may include a function of capturing a video image from the police box terminal as a still image and a function of recording the image in an investigation record file, an officer of the reception terminal can record a photograph, an illustration or other image presented by the filing person to the video camera into the investigation record file while interviewing the visitor to the police box terminal by videophone.

In the videophone police box system according to preferred embodiments of the present invention, the reception unit may include a function of activating a montage application for creating a montage by an operation from a terminal as an shared application among the reception terminal and the police box terminal, and a function of recording an image created by the activated montage application into the investigation record file, thereby enabling an officer of the reception terminal to create a montage and record it into the investigation record file while interviewing a visitor to the police box terminal by videophone.
Since the videophone police box system may include a function of recording an image created by a montage application that is activated as a shared application among a reception terminal and a police box terminal into the investigation record file, a montage can be created during a discussion between an officer at the reception terminal and a visitor at the police box terminal and recorded into the investigation record file.

In the videophone police box system, the reception unit may include a function of activating a drawing application that creates a drawing by an operation from a terminal as a shared application among the reception terminal and the police box terminal, and a function of recording the drawing created by the activated drawing application into the investigation record file, thereby enabling an officer of the reception terminal to create a drawing and to record it into the investigation record file, while interviewing a visitor to the police box terminal.
Since the videophone police box system may include a function of recording a drawing created by a drawing application activated as a shared application among a reception terminal and a police box terminal into an investigation record file, it is possible to create a drawing of an accident site during a discussion between an officer at the reception terminal and a visitor at the police box terminal and record it into the investigation record file.

In the videophone police box system, the reception unit may include a function of displaying a list of connectable terminals and a function of calling and connecting one of the terminals that is selected from the displayed list, while a reception terminal is connected to a police box terminal by videophone.
Since the videophone police box system may include a function of calling and connecting a connectable terminal while a reception terminal is connected to a police box terminal by videophone, it is possible, for example, to maintain a connection with the police box terminal and connect with a relevant department's terminal by videophone so as to get advice, transfer the connection with the police box terminal to a terminal in a department relevant to the case so as to get a more specific statement, and/or connect a plurality of relevant departments to a videoconference so as to set up an investigation conference, thus facilitating rapid resolution of the case.

In the videophone system, the reception unit may include a function of displaying a map around a police box from which the call is accepted, a function of acquiring GPS information from a mobile terminal of a patrolling police officer, a function of displaying the present location of the patrolling police officer on the map based on the acquired GPS information, and a function of calling a mobile terminal of a patrolling officer who is selected from the displayed map on which the present location of the patrolling police officer is displayed and connecting that mobile terminal.
Since the videophone system may include a function of displaying the present location of a patrolling police officer on a map around the police box while a reception terminal is connected to the corresponding police box terminal by videophone and a function of calling and connecting a mobile terminal of a patrolling police officer selected on the map, it is possible, for example, to maintain a connection with the police box terminal, connect with a mobile terminal of the nearest patrolling police officer by videophone so as to make the patrolling police officer rush to a site of a case, transfer the connection with the police box terminal to the mobile terminal of the nearest patrolling police officer so as to enable direct consultation, and/or connect mobile terminals of a plurality of patrolling police officers to a videoconference so as to conduct a discussion, thus facilitating rapid resolution of the case.

In the videophone police box system, the reception unit may include a function of accepting a call from a mobile phone of a patrolling police officer and a function of connecting the mobile phone from which the call is accepted to the automatic investigation record creating unit, thereby allowing the patrolling police officer to create an investigation record file at a site of a case.
Since the mobile terminal of the patrolling police officer is connected to the automatic investigation record creating unit, the patrolling police officer can create an investigation record or a daily log at the site of the case in a simple manner by using a video image.

In the videophone police box system, a videophone terminal installed in a public telephone booth may include a function of calling the reception unit so that the videophone terminal installed in the public telephone booth functions as the police box terminal.
Since a videophone terminal installed in a public telephone booth can function as a police box terminal by calling the reception unit from that videophone terminal, it is possible to automatically create an investigation record rapidly from a nearest public telephone booth and call a police officer of the reception terminal so as to consult with the police officer, if necessary, when an accident occurs.

In the videophone police box system, the police box terminal may be installed on a street light such that a video camera is detachable and attachable.
The installation of the police box terminal on a street light enables a swift creation of an investigation record from the nearest street light when an accident occurs on a street and to a call, according to need, to a police officer of the reception terminal so as to consult with the police officer.
In addition, according to preferred embodiments of the present invention, since the video camera can be detached and attached, it is possible to record a video or an image of a accident site directly into an investigation record by pointing the video camera at the site when accepting a usual call, and to show a police officer the site so as to obtain directions from the police officer when accepting an emergency call.

In the videophone police box system, the police box terminal may be installed on a roadside emergency telephone booth such that a video camera is detachable and attachable.
The installation of the police box terminal in the roadside emergency telephone booth enables rapid creation of an investigation record from a nearest emergency telephone booth, when a traffic accident occurs on a road, and it is possible to call a police officer of the reception terminal so as to consult with the police officer, if necessary.
In addition, according to preferred embodiments of the present invention, since the video camera can be detached and attached, it is possible to record a video or an image of the site directly into an investigation record by pointing the video camera at an accident site, and to show a police officer the site so as to obtain directions from the police officer in the case of an emergency call.

### ADVANTAGE OF THE INVENTION

According to preferred embodiments of the present invention, an emergency call and a usual reception are separated from each other and creation of an investigation record in the case of the usual reception is automatically performed without handling by a police officer. Therefore, the present invention provides a videophone police box system in which a limited number of officers can handle a large number of visitors.
Other features, elements, steps, characteristics and advantages of the present invention will become more apparent from the following detailed description of preferred embodiments of the present invention with reference to the attached drawings.

### BRIEF DESCRIPTION OF THE DRAWINGS

Fig. 1 shows a system configuration of a videophone police box system according to one preferred embodiment of the present invention.
Fig. 2 illustrates an example of a remote controller for operating a police box terminal.
Fig. 3 is a flowchart of an example of a police box terminal side procedure.
Fig. 4 is a flowchart of an example of a police box terminal reception procedure in a reception server (part 1).
Fig. 5 is a flowchart of the example of the police box terminal reception procedure in the reception server (part 2).
Fig. 6 is a flowchart of an example of a damage report creating procedure in the reception server.
Fig. 7 is a flowchart of an example of an incident information report creating procedure in the reception server.
Fig. 8 is a flowchart of an example of a wanted person information report creating procedure in the reception server.
Fig. 9 is a flowchart of an example of a missing person search request creating procedure in the reception server.
Fig. 10 is a flowchart of an example of a found article report creating procedure in the reception server.
Fig. 11 is a flowchart of an example of a lost article report creating procedure in the reception server.
Fig. 12 is a flowchart of an example of a traffic accident report creating procedure in the reception server.
Fig. 13 is a flowchart of an example of a license renewal procedure in the reception server.
Fig. 14 is a flowchart of an example of a route guidance procedure in the reception server.
Fig. 15 is a flowchart of an example of an election procedure in the reception server.
Fig. 16 is a flowchart of an example of an answer acquiring procedure in the reception server.
Fig. 17 is a flowchart of an example of an image acquiring procedure in the reception server.
Fig. 18 is a flowchart of an example of a reception terminal responding procedure in the reception server.
Fig. 19 is a flowchart of an example of an investigation record creating procedure by a reception terminal.
Fig. 20 is a flowchart of an example of a procedure for calling a terminal from the reception terminal.
Fig. 21 is a flowchart of an example of a task operating procedure by the reception terminal.
Fig. 22 shows examples of setting of a reception table in the reception server (Part 1 to Part 3).
Fig. 23 shows examples of the setting of the reception table in the reception server (Part 4 to Part 6).
Fig. 24 shows an example of a crime information database in a crime information management server.
Fig. 25 shows an example of a damage report file.
Fig. 26 shows an example of an incident information report file.
Fig. 27 shows an example of a wanted person information report file.
Fig. 28 shows an example of a missing person search request file.
Fig. 29 shows an example of a found article report file.
Fig. 30 shows an example of a lost article report file.
Fig. 31 shows an example of a traffic accident report file.
Fig. 32 shows an example of an initial screen displayed on the police box terminal.
Fig. 33 shows an example of a menu screen displayed on the police box terminal.
Fig. 34 shows an exemplary screen displayed on the reception terminal during consultation.
Fig. 35 shows an example of an investigation record creating screen displayed on the reception terminal.
Fig. 36 shows an example of an external terminal calling screen that is displayed on the reception terminal.
Fig. 37 shows an example of a screen for confirming present location of patrolling police officer that is displayed on the reception terminal.

### DESCRIPTION OF REFERENCE NUMERALS

- 10: Police box
- 12: Police box terminal installed in a police box
- 13: Remote controller for operating a police box terminal
- 14: Visitor sensor
- 15: Found article tray
- 16: Found article imaging camera
- 17: Found article storage
- 20: Telephone booth
- 22: Police box terminal installed in the phone booth
- 30: Street light
- 32: Police box terminal provided on the street light
- 40: Emergency telephone booth on an expressway
- 42: Police box terminal installed on the expressway
- 44: Detachable camera
- 50: GPS locator-equipped mobile phone for a patrolling police officer
- 52: Mobile phone base station
- 60: Head quarter
- 61, 62, 63, ...: Department's videophone terminals installed in respective departments of the head quarter
- 100: Videophone reception center
- 110: Reception server
- 120: Automatic answering server
- 130: MCU
- 140: Reception terminal
- 200: Crime information center
- 210: Crime information management server
- 300: Lost-and-found article center
- 310: Lost-and-found article management server
- 320: Lost-and-found article center's terminal
- 330: Lost-and-found article storage
- 400: Driver's license center
- 410: Driver's license management server
- 420: Driver's license center's terminal
- 500: Election administration center
- 510: Election administration server
- 520: Election administration center's terminal
- 600: Communication line

### BEST MODE FOR CARRYING OUT THE INVENTION

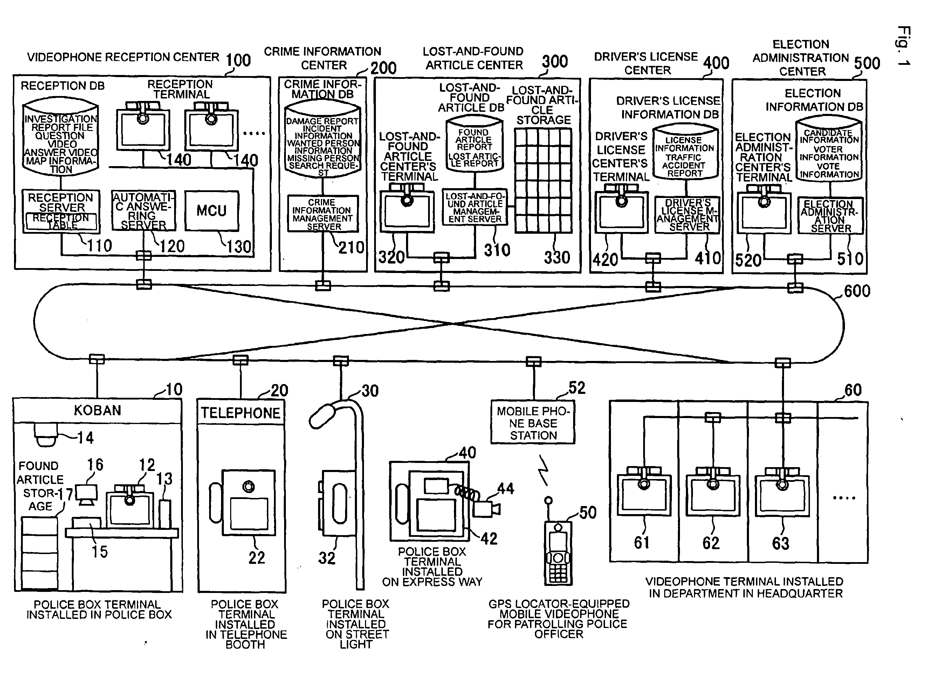

Fig. 1 shows a system configuration of a videophone police box system according to a preferred embodiment of the present invention.
In Fig. 1, the numeral 10 denotes a police box including a police box terminal 12 that is connected to a communication line 600 and includes a videophone function, a remote controller 13 for operating the police box terminal 12, a visitor sensor 14 that is connected to the police box terminal 12 and detects a visitor to the police box, a found article tray 15 for accommodating a found article brought by the visitor, a found article imaging camera 16 that is connected to the police box terminal 12 and takes an image of the found article accommodated in the found article tray 15, and a found article storage 17 that is connected to the police box terminal 12 and stores the found article brought by the visitor while the found article is accommodated in the found article tray 15.
In the shown example, for the sake of simplicity, the police box terminal 12 only includes a video monitor on which a video image of a conversation partner is displayed, a set-top box that is set on the video monitor so as to perform a videophone communication, and a video camera extending downward from the set-top box so as to take an image of a user. A speaker for outputting the voice of the conversation partner and a microphone for inputting a user's voice are not shown in Fig. 1. However, a headset including the microphone and the speaker or a receiver may be used. Alternatively, the speaker may be incorporated into a monitor screen and a pin-type microphone may be used, for example. The above description is the same in videophone terminals described below.

The numeral 20 denotes a public telephone booth which is equipped with a videophone terminal 22 connected to the communication line 600. A calling button exclusively used for providing a videophone police box service is provided. When this calling button is pressed, a reception server described later is called and the videophone terminal 22 functions as a police box terminal. Alternatively, a call to the reception server may be made by calling a predetermined telephone number.
The numeral 30 denotes a street light which is equipped with a videophone terminal 32 connected to the communication line 600. When the reception server described later is called from the street, the videophone terminal 32 functions as a police box terminal.
The numeral 40 denotes an emergency telephone booth which is installed on an expressway, and to which a videophone terminal 42 connected to the communication line 600 is provided. When a call to the reception server described later is made from an expressway, the videophone terminal 42 functions as a police box terminal. A camera 44 of the police box terminal 42 installed on the expressway can be detached and attached. Thus, an informing person can detach the camera 44 so as to take and send an image of a site. This is the same in the police box terminal 32 installed on the street light.
In the following description, only the police box terminal 12 installed in the police box is described. However, it should be noted that an emergency call, a traffic accident report, route guidance and other calls can be made from the other police box terminals 22, 32, and 42.

The numeral 50 denotes a GPS locator-equipped mobile videophone for a patrolling police officer, and the videophone 50 is connected to the communication line 600 via a mobile phone base station 52.
The numeral 60 denotes a police headquarters in which department videophone terminals 61, 62, ... are provided in respective departments and are connected to the communication line 600.

The numeral 100 denotes a videophone reception center including a reception server 110 that is connected to the communication line 600 and receives a call from the police box terminal 12, an automatic answering server 120 that is connected to the communication line 600 and automatically answers the call from the police box terminal 12 so as to create an investigation record, guide a route, and renew a license, for example; an MCU (multipoint connection unit) 130 that is connected to the communication line 600 and mediates a videophone connection between terminals, and a reception terminal 140 that is connected to the communication line 600 and includes a videophone function that allows an officer of the reception center to respond to an emergency call from the police box terminal 12 and a consultation request accepted during automatic answering by the automatic answering server 120.
The reception server 110 includes a reception table in which, for a call from a police box terminal, an address of a reception terminal 140 handling the call or a port number of the automatic answering server 120 is registered. The reception server 110 also includes a reception database in which templates of various investigation record files, question videos respectively corresponding to various items in the investigation record files, map information and other information are stored.

The numeral 200 denoted a crime information center that performs central control of crime information handled by this system, is connected to the communication line 600, and includes a crime information management server 210. The crime information management server 210 includes a crime information database in which investigation record files, e.g., a damage report, an incident information report, a wanted person information report, and a missing person search request, created by the police box terminal 12, the reception terminal 140 and other components are registered. In addition, the wanted person information report, the incident information report and other reports can be registered into the crime information database from the department's terminals 61, 62, 63, ... provided in respective departments of the headquarters.
The numeral 300 denotes a lost-and-found article center which stores and manages a lost and found article brought to a police box. The lost-and-found article center 300 includes a lost-and-found article management server 310 that is connected to the communication line 600 and manages the lost and found article, a lost-and-found article center's terminal 320 that is connected to the communication line 600 and is used by an officer of the lost-and-found article center, and a lost-and-found article storage 330 that is connected to the lost-and-found article management server 310 and stores the lost and found article provided from the police box. The lost-and-found article management server 310 includes a lost-and-found article database in which investigation record files such as a found article report and a lost article report created by the police box terminal 12, the reception terminal 140 and other components are registered.
The numeral 400 denotes a driver's license center that performs central control of driver's licenses, and includes a driver's license server 410 that is connected to the communication line 600 and manages driver's license information, and a driver's license center's terminal 420 that is connected to the communication line 600 and is used by an officer of the driver's license center. The driver's license server 410 includes a driver's license information database in which driver's license information, a traffic accident report and other information are registered.
The numeral 500 denotes an election administration center including an election administration server 510 that is connected to the communication line 600 and manages election information, and an election administration center's terminal 520 that is connected to the communication line 600 and is used by an officer of the election administration center. The election administration server 510 includes an election information database in which candidate information, voter information, vote information and other information for an election are registered.
The communication line 600 is a line for communication within a police system. A dedicated line, such as WAN (Wide Area Network), is usually used as the communication line 600 so as to provide security.

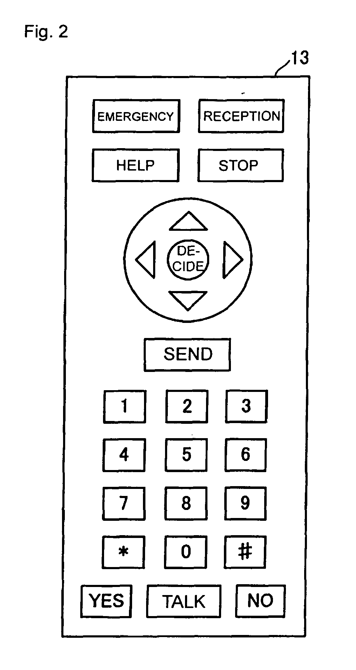

Fig. 2 illustrates an exemplary remote controller 13 for operating the police box terminal 12.
As shown in Fig. 2, the remote controller 13 includes an "EMERGENCY" button used for making an emergency call and a "RECEPTION" button used for a usual reception. The remote controller 13 also includes buttons used during automatic answering in the usual reception, which include a "HELP" button used for calling an officer of the reception center, a "STOP" button used for stopping an operation, selection buttons for menu selection, a "DECIDE" button for deciding the selected menu, a "SEND" button for sending input information to the reception server, numeric buttons used for inputting numbers and characters, a "YES" button and a "NO" button used for inputting yes-no answers in response to a question, and a "TALK" button used for verbally answering a question.
In the shown example, all of the buttons are provided on the remote controller 13 for the sake of simplicity. Alternatively, an "EMERGENCY" button, a "RECEPTION" button, a "YES" button, a "NO" button, a "TALK" button and other buttons may be provided as buttons for exclusive use that are arranged on a desk, for example.

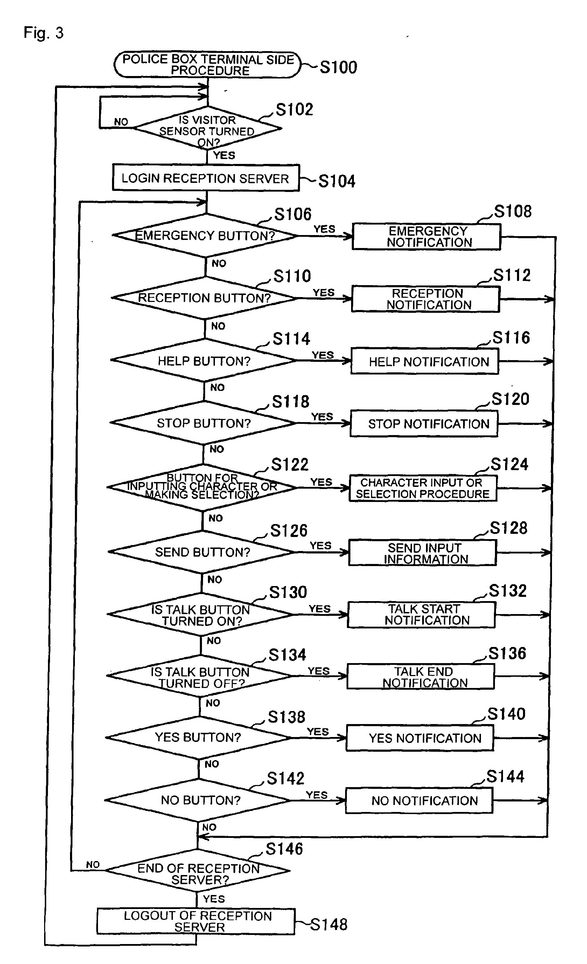

Fig. 3 shows a flow chart of a police box terminal side procedure (S100) on a police box terminal 12 of the videophone police box system according to one preferred embodiment of the present invention.
As shown in Fig. 3, when the visitor sensor 14 detects a visitor to the police box (S102), the police box terminal logs into the reception server 110 (S104). When the "EMERGENCY" button is pressed (S106), the police box terminal issues an "Emergency notification" (S108). When the "RECEPTION" button is pressed (S110), the police box terminal issues a "Reception notification" (S112). When the "HELP" button is pressed (S114), the police box terminal issues a "Help notification" (S116). When the "STOP" button is pressed (S118), the police box terminal issues a "Stop notification" (S120). When a character inputting or selection button is pressed (S122), input of a character corresponding to that button or a selection process corresponding to that button is performed (S124). When the "SEND" button is pressed (S126), the police box terminal sends input information (S128). When the "TALK" button is turned on (S130), the police box terminal issues a "Talk start notification" (S132). When the "TALK" button is turned off (S134), the police box terminal issues a "Talk end notification" (S136). When the "YES" button is pressed (S138), the police box terminal issues a "YES notification (S140). When the "NO" button is pressed (S142), the police box terminal issues a "NO notification" (s144). The police box terminal repeats the above operations until the reception server 110 terminates a reception procedure (S146). When the reception server 110 terminates the reception procedure, the police box terminal logs off and the procedure goes back to Step S102.

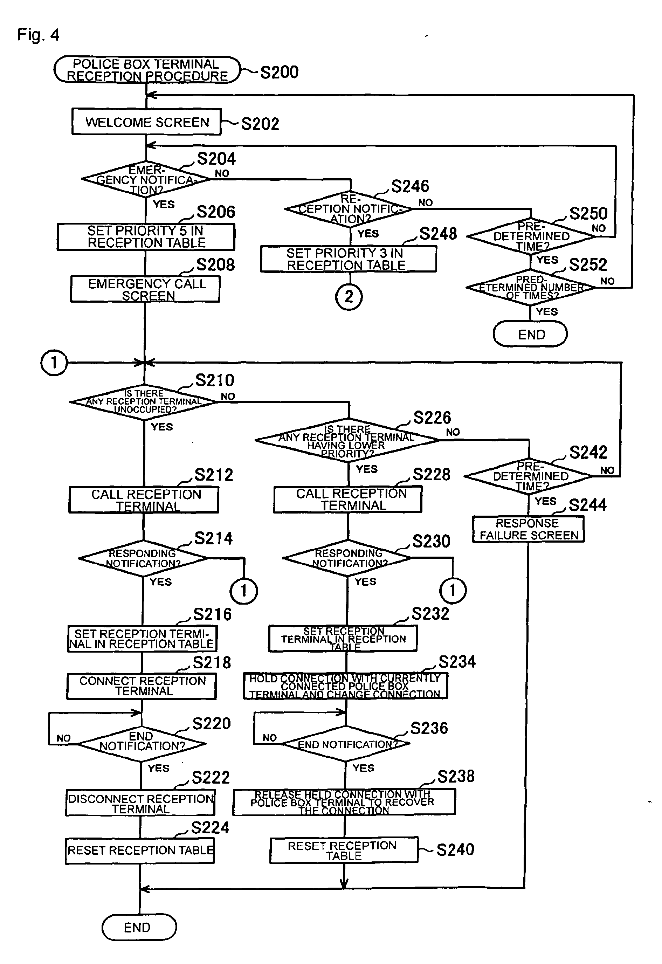

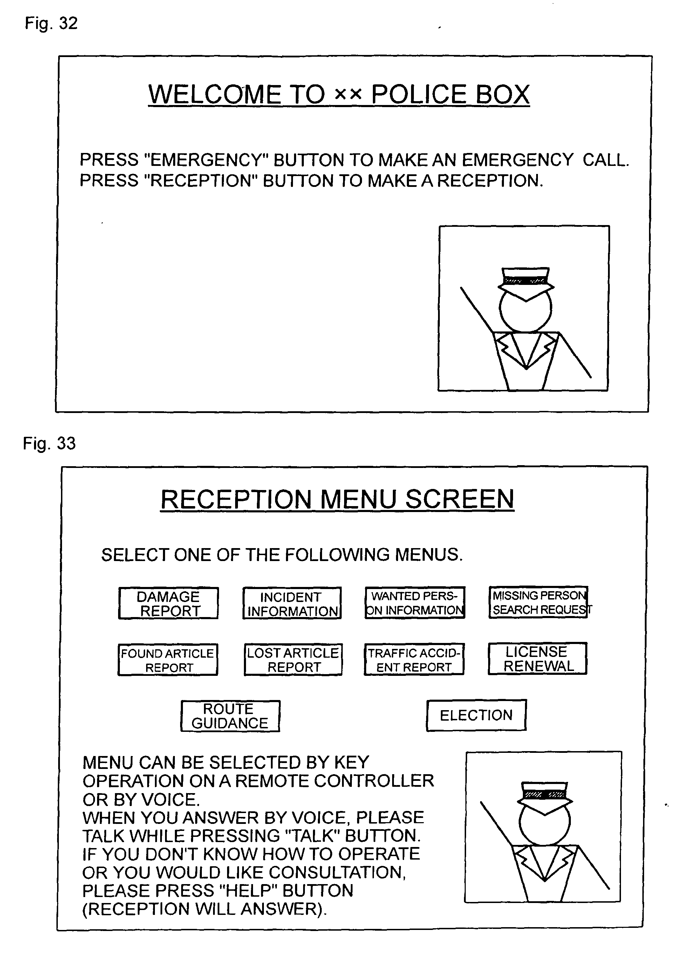

Figs. 4 to 5 show a flow chart of the police box terminal reception procedure (S200) in the reception server 110 of the videophone police box system according to one preferred embodiment of the present invention.
As shown in Fig. 4, first, a "Welcome screen" shown in Fig. 32 is displayed (S202). On the "Welcome screen", operating instructions are provided by characters and with voice so as to accommodate a blind person.
When receiving an "Emergency notification" on the "Welcome screen" (S204), the reception server 110 sets priority 5 in the reception table (S206), displays an "Emergency call screen" (not shown) indicating that an emergency call is received (S208), and checks service statuses of reception terminals 140 by referring to the reception table. If there is a reception terminal 140 that is not connected (S210), the reception server 110 calls that reception terminal (S212). When a notification that the terminal can respond is received from that reception terminal (S214), the reception server 110 sets that reception terminal in the reception table (S216) and connects the police box terminal from which the call is accepted to that reception terminal (S218). When the responding notification is not received from that reception terminal, the procedure goes back to Step S210 and the reception server 110 searches for another reception terminal that can accept the call.
When receiving an end notification from the reception terminal after the police box terminal is connected to that reception terminal (S220), the reception server 110 disconnects the connection with the reception terminal (S222) and resets the reception table (S224).
If there is no reception terminal that is not connected in Step S210, the reception server 110 refers to the reception table to check whether there is any police box terminal to which a reception terminal is connected and which has a priority lower than a predetermined priority. When such a police box terminal is found (S226), the reception server 110 calls a reception terminal connected to that police box terminal (S228). When receiving a responding notification (S230), the reception server 110 sets that reception terminal in the reception table (S232), holds a connection with the police box terminal that is currently connected, and switches the connection with that police box terminal into a connection with the police box terminal from which the call is accepted (S234). When the responding notification is not received from that reception terminal, the procedure goes back to Step S210 and the reception server 110 searches for another reception terminal that can accept the call.
When receiving an end notification from the reception terminal after the reception terminal is connected to the police box terminal (S236), the reception server 110 releases the held connection with the police box terminal to recover the connection with that reception terminal (S238), and resets the reception table (S240).

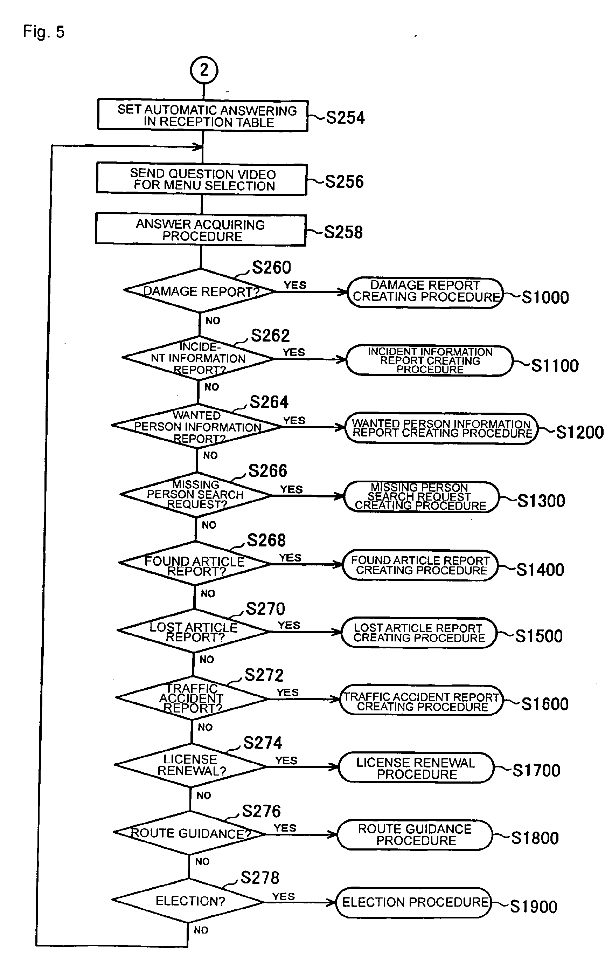

When receiving a "Reception notification" on the "Welcome menu" (S246), the reception server 110 sets priority 3 in the reception table (S248) and proceeds to Step S254 in Fig. 5. Until the reception server 110 receives a notification on the "Welcome menu", the operations are repeated from Step S204. When a predetermined time elapses (S250), the reception server 110 goes back to Step S202 and repeats the operations from displaying the "Welcome screen". Such operation is repeated a predetermined number of times (S252). When there is no response, then the procedure is terminated.
The priority can be set to a given value by a reception terminal that accepts a call from a police box terminal based on the urgency of the call, as described later. In this example, the police box terminal having lower priority than the predetermined priority in Step S226 is a police box terminal having lower priority in terms of the priority level of a caller(5 is set for an emergency call and 3 is set for a usual reception, as an initial value). When all of the reception terminals are occupied, the reception server 110 selects a police box terminal having the lowest priority among police box terminals to which reception terminals are already connected and calls a reception terminal to which the selected police box terminal is connected.

When a "Reception notification" is received on the "Welcome screen", the reception server 110 sets a port number of the automatic answering server 120 in the reception table (S254) and connects the police box terminal from which the call was accepted to the automatic answering server. Then, the reception server 110 displays a "Menu screen" shown in Fig. 33 (S256) and performs an answer acquiring procedure for acquiring an answer to a question video of "Menu screen" (S258). The details of the answer acquiring procedure (S300) will be described later.
When the answer acquired in the answer acquiring procedure is a "Damage report" (S260), a damage report is automatically created in a damage report creating procedure (S1000). In the case of an "Incident information report" (S262), an incident information report is automatically created in an incident information report creating procedure (S1100). In the case of a "Wanted person information report" (S264), a person information report is automatically created in a wanted person information report creating procedure (S1200). In the case of a missing person search request (S266), the missing person search request is automatically created in a missing person search request creating procedure (S1300). In the case of a found article report (S268), the found article report is automatically created in a found article report creating procedure (S1400). In the case of a lost article report (S270), the lost article report is automatically created in a lost article report creating procedure (S1500).
In the case of a traffic accident report (S272), the traffic accident report is automatically created in a traffic accident report creating procedure (S1600). In the case of a license renewal (S274), a license is automatically renewed in a license renewal procedure (S1700). In the case of a route guidance (S276), a route is automatically guided in a route guidance procedure (S1800). In the case of an election (S278), an election process is automatically performed in an election procedure (S1900).
If a "Help Notification" is received during automatic answering by the automatic answering server 120, as described later, the operations from Step S210 are performed so as to search and call a reception terminal that is available to respond.

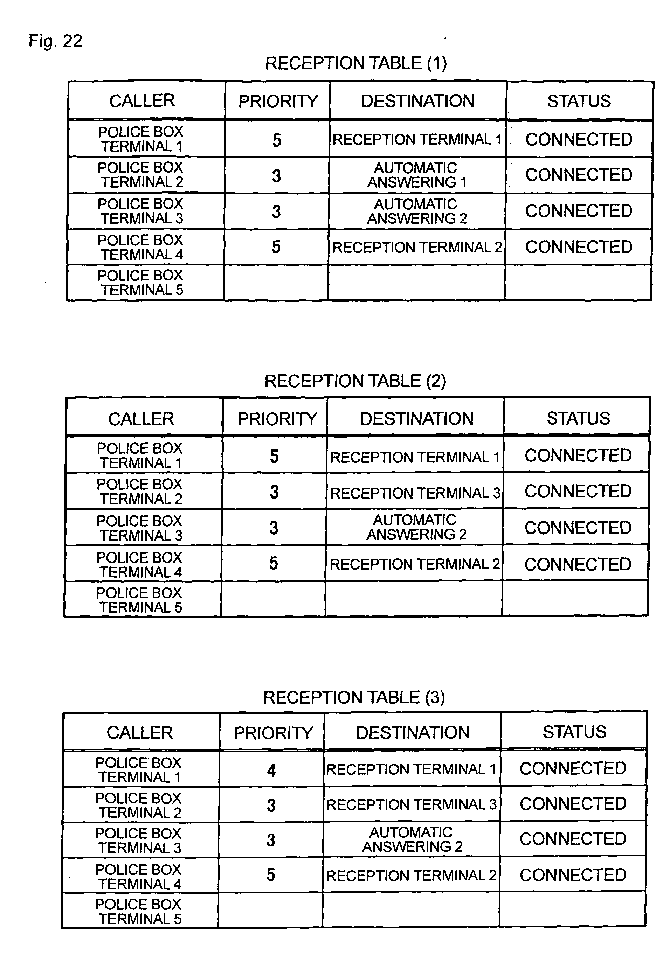

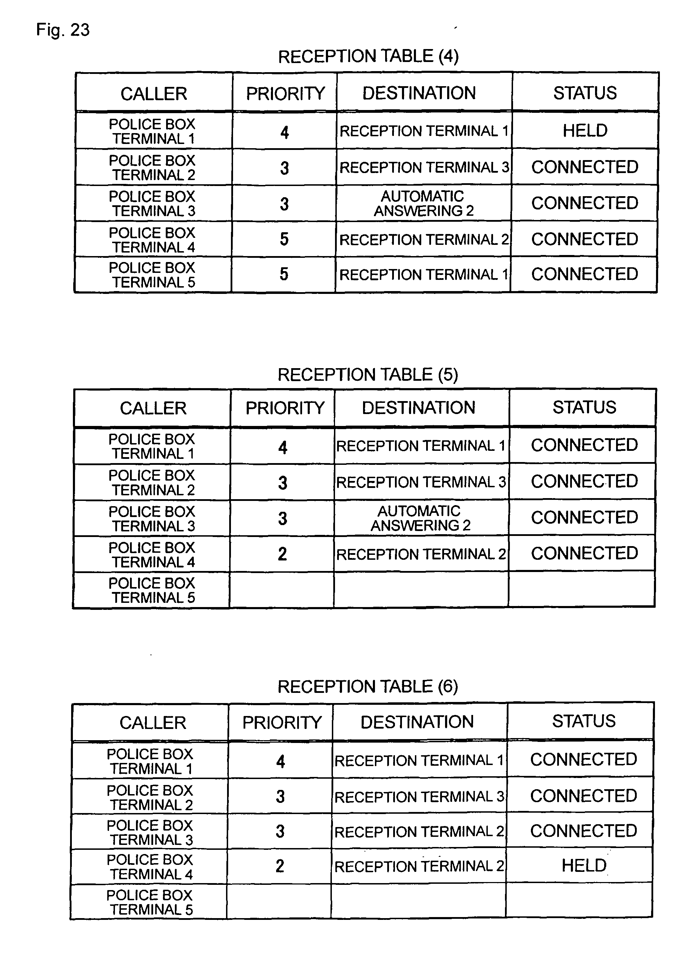

Figs. 22 to 23 show an example of the reception table that is set in the aforementioned operations.
As shown in Figs. 22 and 23, the reception table includes a caller field in which an address of a police box terminal from which a call is accepted is set, a priority field in which the priority of the police box terminal from which the call is accepted is set, a destination field in which an address of a reception terminal or a port number of the automatic answering server that responds to the call from the police box terminal is set, and a status field in which a status indicating whether the police box terminal from which the call is accepted is connected to the reception terminal set in the destination field or is held due to a call from another police box terminal.
In the following description, an example of contents set in the reception table is described in time sequence, assuming that police box terminals are provided at five locations and three reception terminals are provided, for the sake of simplicity.
Reception table (1) shows a state in which an emergency call from a Police box terminal 1 is accepted and connected to reception terminal 1, a usual reception from a Police box terminal 2 is accepted and connected to Automatic answering 1, a usual reception from a Police box terminal 3 is accepted and connected to Automatic answering 2, and an emergency call from a Police box terminal 4 is accepted and connected to Reception terminal 2.
Reception table (2) shows a state in which a consultation request is received from Police box terminal 2 and Reception terminal 3 that is not connected is connected to Police box terminal 2.
Reception table (3) shows a state in which Reception terminal 1 sets an emergency level of Police box terminal 1 and reduces the priority of Police box terminal 1 to 4.
Reception table (4) shows a state in which an emergency call is newly accepted from Police box terminal 5, connection with Police box terminal 1 having the lowest priority among police box terminals to which reception terminals are connected is held, and Reception terminal 1 responding to Police box terminal 1 is connected to Police box terminal 5.
Reception table (5) shows a state in which a process of Police box terminal 5 is finished, and the held connection of Police box terminal 1 is released so that Police box terminal 1 is again connected to Reception terminal 1. In this state, Reception terminal 2 responding to Police box terminal 4 reduces the priority of Police box terminal 4 to 2.
Reception table (6) shows a state in which a consultation request is accepted from Police box terminal 3, connection with Police box terminal 4 having the lowest priority among police box terminals to which reception terminals are connected is held, and Reception terminal 2 responding to Police box terminal 4 is connected to Police box terminal 3.
In this manner, when all reception terminals are connected, an appropriate one of the reception terminals can be selected in accordance with an emergency level of a police box terminal from which a call is newly accepted and an emergency level of the connected police box terminal, by changing the priority of the police box terminal appropriately from the reception terminal. Therefore, efficient handling of the connections is achieved.
Based on the contents set in the reception table, videophone connection between a police box terminal and a reception terminal is performed in MCU 130.

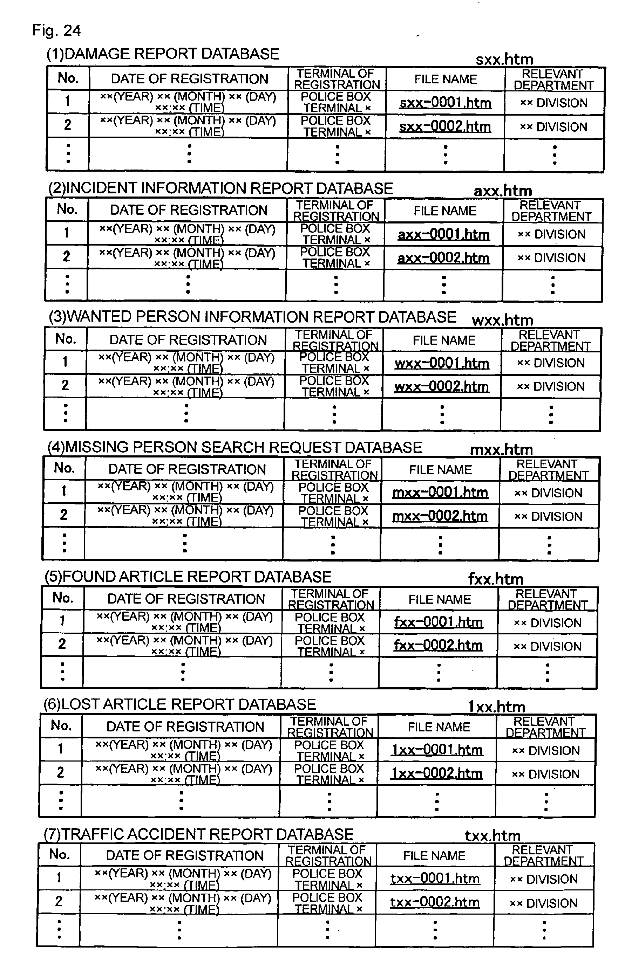

Fig. 24 shows exemplary databases in each of which an investigation record (a damage report, an incident information report, a wanted person information report, a missing person search request, a found article report, a lost article report, and a traffic accident report) created by the automatic answering server 120 is registered. As shown in Fig. 24, each database includes a registration date field in which a date of registration of an investigation record is set, a registration terminal field in which a name of a terminal registering the investigation record is set, a file name field in which a file name of the investigation record is set, and a relevant department field in which a name of a relevant department that is relevant to the investigation record is set. When a file name is clicked on a screen, a corresponding investigation record file is opened. In the relevant department field, a name of a department that should be informed if information relevant to a corresponding investigation record file is provided can be set from a reception terminal and another terminal connected to the communication line any time, as described later. When a similar investigation record file is found by a check of similarities between the investigation record file to be registered and crime information, an address table (not shown) is referred to and a terminal of a relevant department is automatically called.

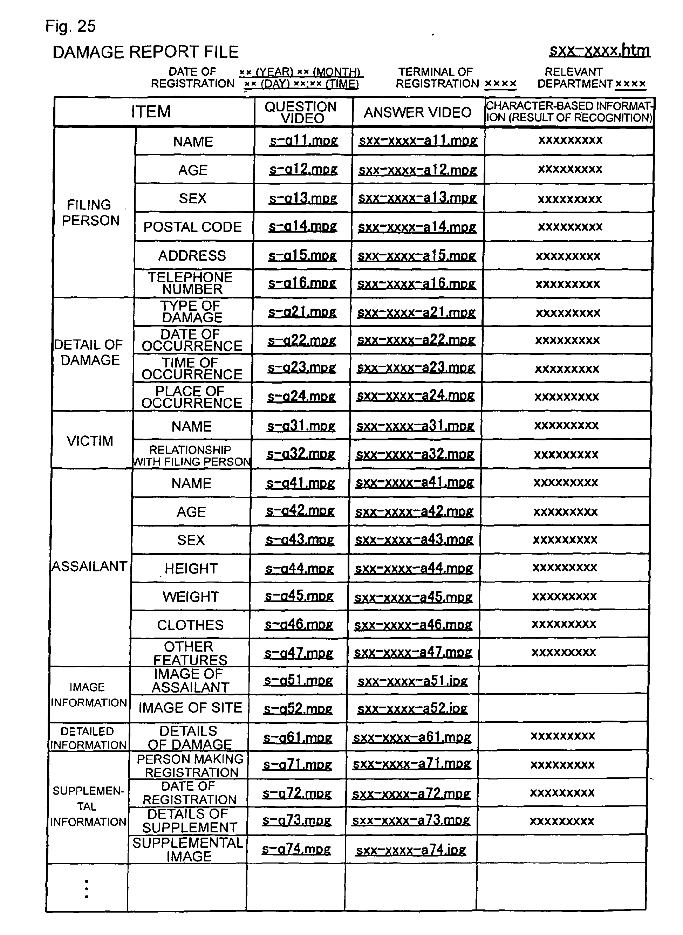

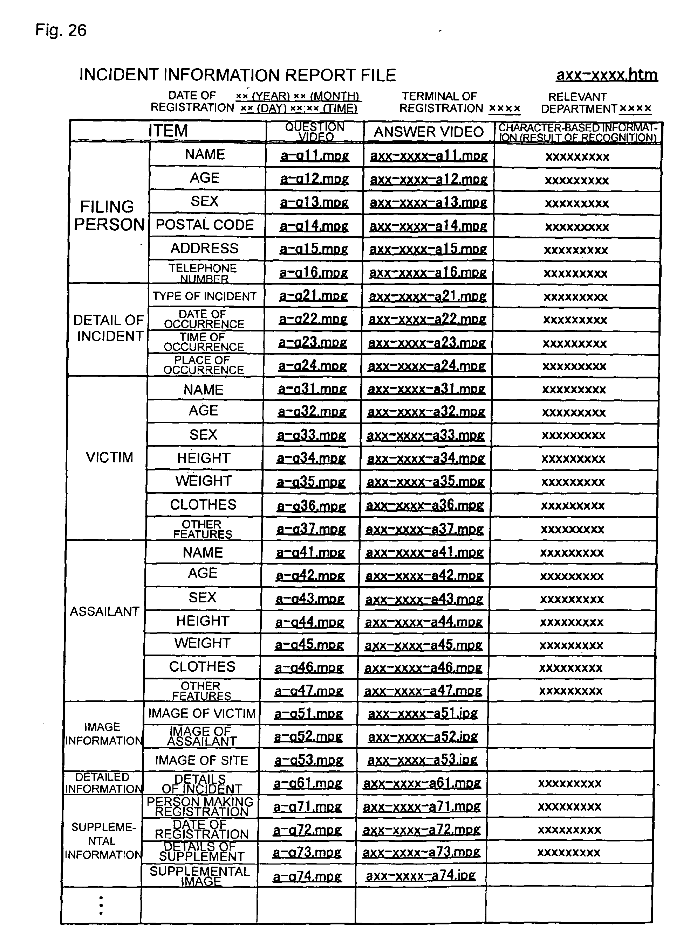

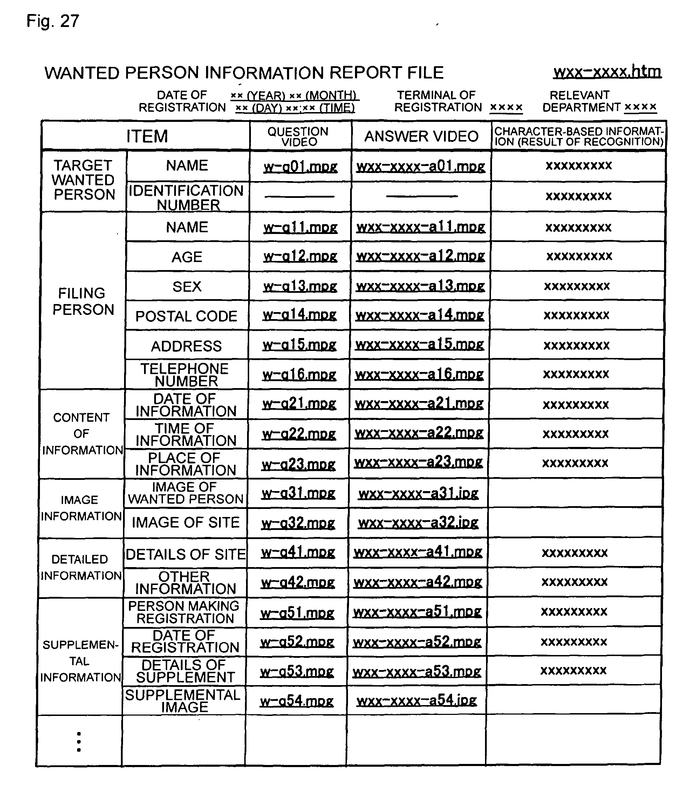

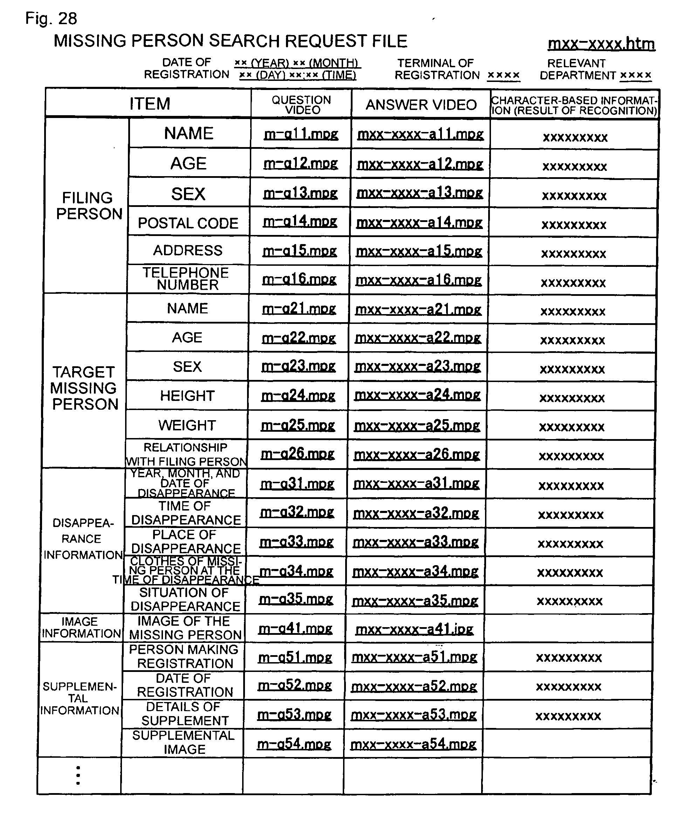

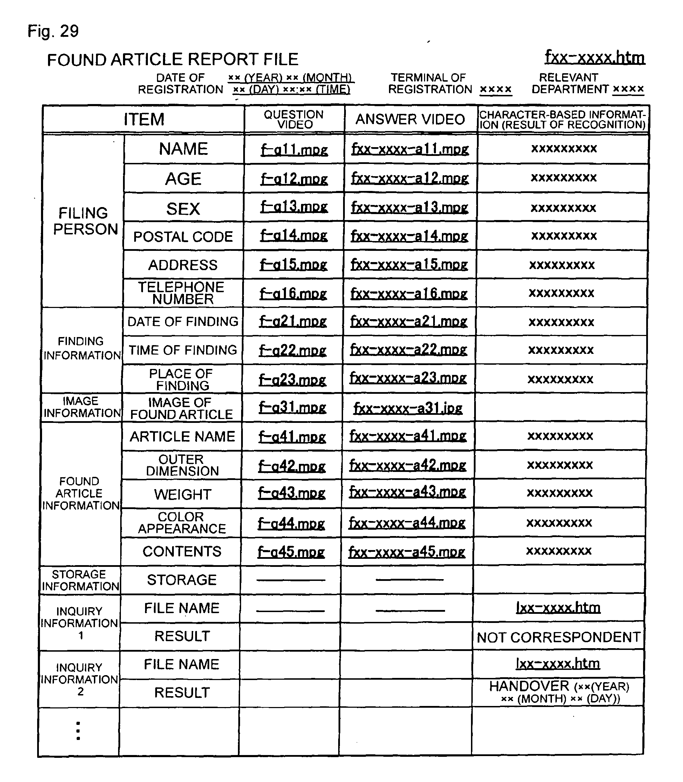

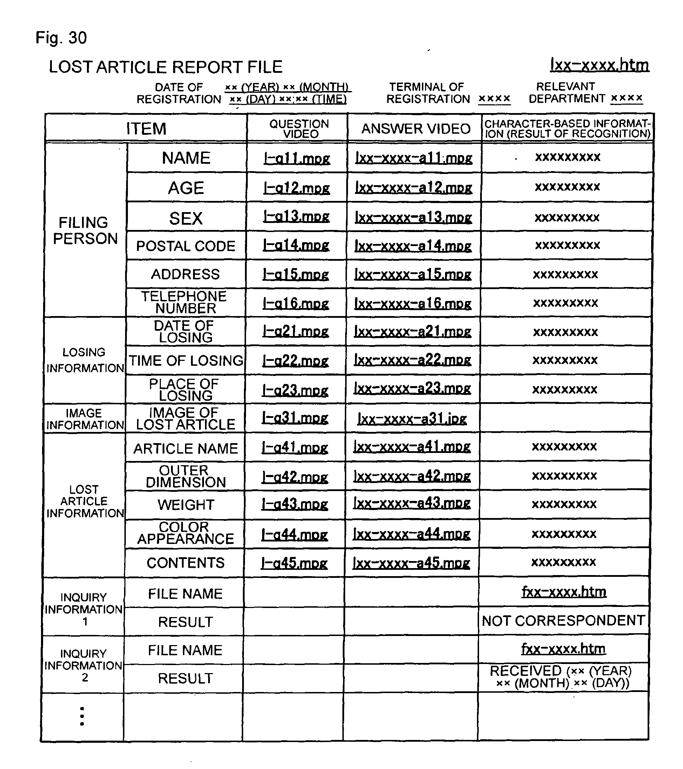

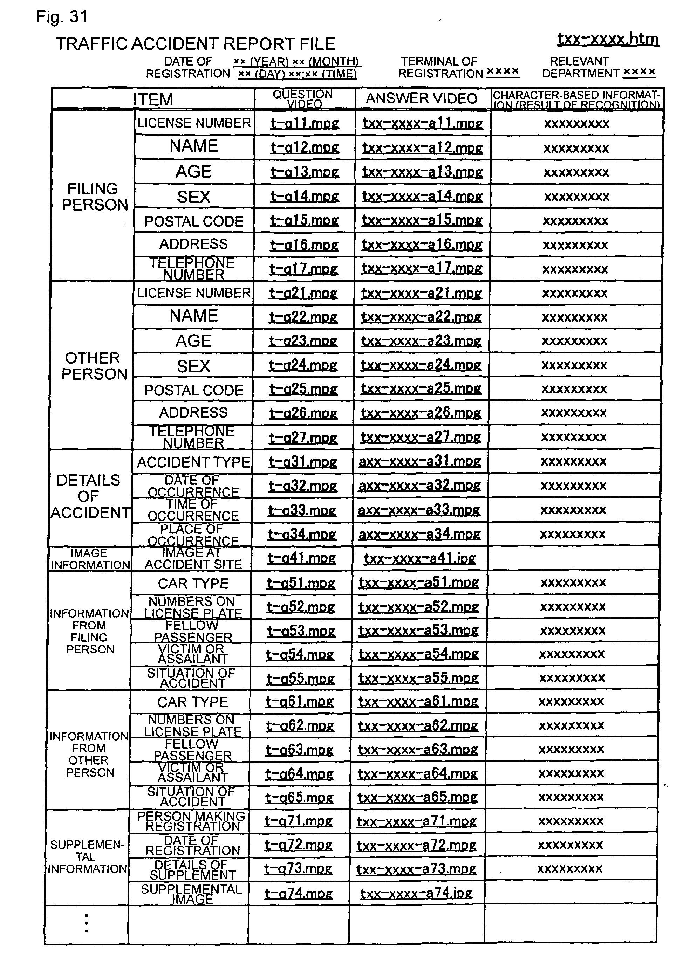

Fig. 25 shows an example of a damage report file. Fig. 26 shows an example of an incident information report file. Fig. 27 shows an example of a wanted person information report file. Fig. 28 shows an example of a missing person search request file. Fig. 29 shows an example of a found article report file. Fig. 30 shows an example of a lost article report file. Fig. 31 shows an example of a traffic accident report file.
As shown in Figs. 25 to 31, each of the investigation record files includes a question item field in which a question item is set, a question video field in which a question video corresponding to each question item is set, an answer video field in which an answer video is recorded when an answer to the question video is given by a video, and a character-based information field in which, when an answer to the question video is made as character-based information, that character-based information is recorded.
The reception database includes an investigation record template file registered therein. In the template file, a predetermined question is recorded in advance in the question video field. Creation of the investigation record is performed using the template file.
In the answer video field, a video presented on the videophone is usually recorded. In the case of image information, a still image is recorded. However, when an input source is a video, that video may be recorded.
As described later, the automatic answering server 120 records one of an audio answer and a character input that is acquired first in an investigation record file. Even when only a video is recorded as an answer to a question video, character-based information obtained by speech recognition of audio of the answer video is recorded in the character-based information field. Therefore, checking the similarity between investigation record files can be automatically performed, as described later.
Moreover, when a question video or an answer video is clicked while an investigation record file is opened on a reception terminal, the clicked video is reproduced so that the contents of the question video or answer video can be confirmed. In addition, while a reception terminal is connected to another terminal, it is possible for that reception terminal and the other terminal to view the reproduced video at the same time by activating a shared video display application.

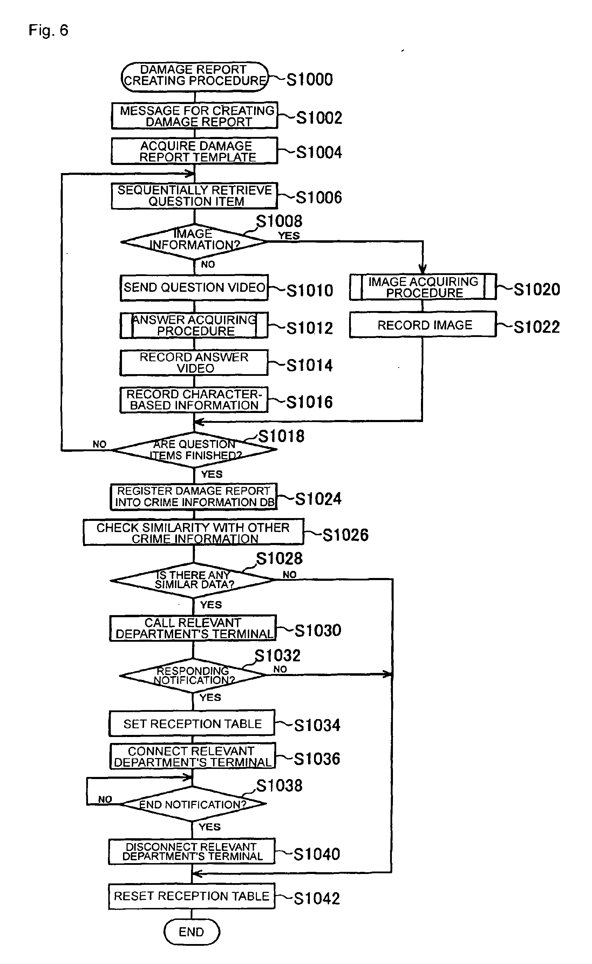

Fig. 6 shows a flow chart of the damage report creating procedure (S1000).
As shown in Fig. 6, first, a "Message for creating a damage report" (not shown) indicating that creation of a damage report begins is displayed (S1002). A template file for a damage report in which a question video is registered for each question item in the damage report is acquired from the reception database (S1004). The question items are sequentially retrieved from the acquired template file (S1006). When a question item is not image information (S1008), a question video corresponding to the question item is sent to the police box terminal (S1010) and an answer acquiring procedure (S300) described later is performed for acquiring an answer to that question video (1012). When an answer video is acquired in the answer acquiring procedure, the acquired answer video is recorded into the damage report file (S1014), and character-based information input on the police box terminal or obtained by speech recognition of the answer video is recorded into the damage report file (S1016). When the question item is image information (S1008), an image acquiring procedure (S350) described later is performed (S1020). When an image acquired by the police box terminal is transferred, the transferred image is recorded into the damage report file (S1022).
The above-described operations are repeated for each of the question items in the damage report file (S1018). When answers to all of the question items are acquired, the damage report file thus created is registered into the crime information database (S1024).
Then, the damage report file thus created is compared with crime information files already registered in the crime information database (S1026). If similar data is found (S1028), information about a relevant department set in the crime information file is acquired and a terminal of the relevant department is called (S1030). When a notification that the terminal can respond is received from the relevant department's terminal (S1032), the relevant department's terminal is set in the reception table (S1034) and the police box terminal from which the damage report is accepted is connected to the relevant department's terminal (S1036). In this manner, the relevant department set in the crime information file can interview a person filing the damage report by videophone so as to obtain further detailed information about a case, thus facilitating rapid resolution of the case.
When an end notification is received from the relevant department's terminal (S1038), connection with the relevant department's terminal is disconnected (S1040), the reception table is reset (S1042), and the damage report creating procedure is terminated.
When no similar data is found in Step S1028 or when the relevant department's terminal does not respond in Step S1032, the procedure goes to Step S1042 without connecting the police box terminal to the relevant department's terminal, thereby terminating the damage report creating procedure.

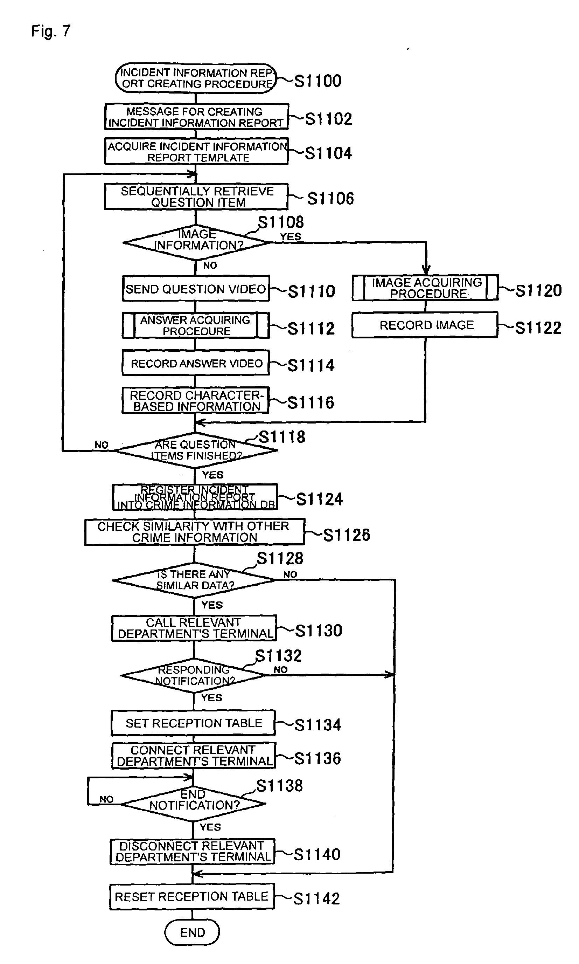

Fig. 7 shows a flow chart of the incident information creating procedure (S1100).
As shown in Fig. 7, first, a "Message for creating an incident information report" (not shown) indicating that creation of an incident information report begins is displayed (S1102). A template file for an incident information report in which a question video is registered for each of question items in the incident information report is acquired from the reception database (S1104). The question items are sequentially retrieved from the acquired template file (S1106). When a question item is not image information (S1108), a question video corresponding to the question item is sent to the police box terminal (S1110) and the answer acquiring procedure (S300) described later is performed for acquiring an answer to that question video (S1112). When an answer video is acquired in the answer acquiring procedure, the acquired answer video is recorded in the incident information report file (S1114) and character-based information input on the police box terminal or obtained by speech recognition of the answer video is recorded in the incident information report file (S1116). When the question item is image information (S1108), the image acquiring procedure (S350) described later is performed (S1120). When an image acquired by the police box terminal is transferred, the transferred image is recorded in the incident information report file (S1122).
The above-described operations are repeated for each of the question items in the incident information report file (S1118). When acquisition of answers to all the question items is finished, the incident information report file thus created is registered into the crime information database (S1124).
Then, the incident information report file thus created is compared with crime information files already registered in the crime information database (S1126). If similar data is found (S1128), information about a relevant department that is set in the crime information file is acquired and a terminal of the relevant department is called (S1130). When a notification that the terminal can respond is received from the relevant department's terminal (S1132), the relevant department's terminal is set in the reception table (S1134) and the police box terminal from which the incident information report is accepted is connected to the relevant department's terminal (S1136). In this manner, the relevant department set in the crime information file can interview a person filing the incident information report by videophone so as to obtain further detailed information about a case, thus facilitating rapid resolution of the case.
When an end notification is received from the relevant department's terminal (S1138), connection with the relevant department's terminal is disconnected (S1140), the reception table is reset (S1142), and the incident information report creating procedure is terminated.
When no similar data is found in Step S1128 or when the relevant department's terminal does not respond in Step S1132, the procedure goes to Step S1142 without connecting the police box terminal to the terminal of the relevant department, thereby terminating the incident information report creating procedure.

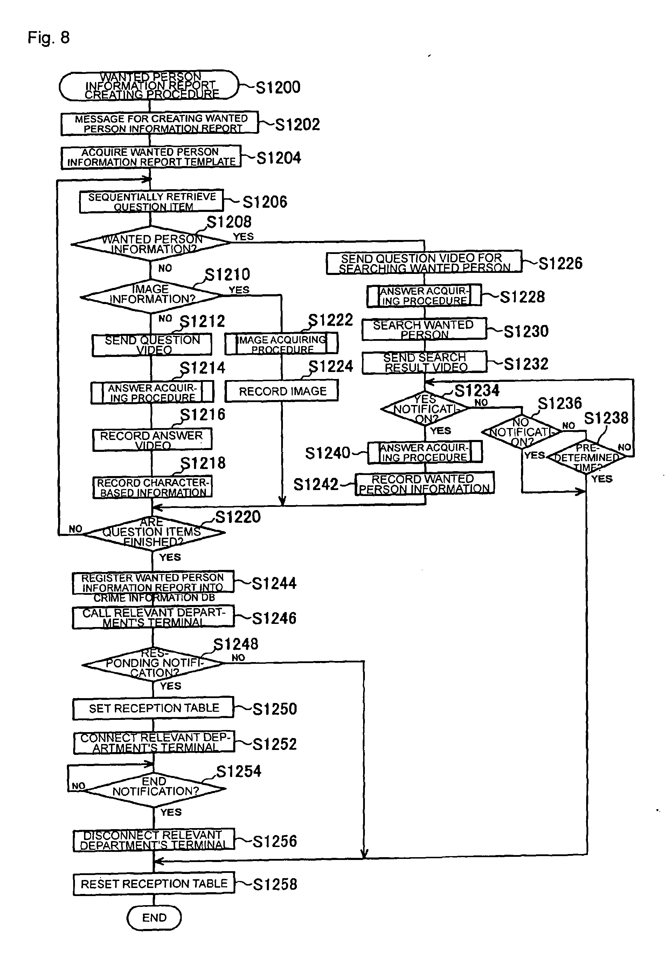

Fig. 8 shows a flow chart of the wanted person information report creating procedure (S1200).
As shown in Fig. 8, first, a "Message for creating a wanted person information report" (not shown) indicating that creation of a wanted person information report begins is displayed (S1202). A template file for a wanted person information report in which a question video is registered for each of question items in the wanted person information report is acquired from the reception database (S1204). The question items are sequentially retrieved from the acquired template file (S1206). When a question item is information about a wanted person (S1208), a question video for inquiring search information required for searching the wanted person is sent to the police box terminal (S1226) and the answer acquiring procedure (S300) described later is performed for acquiring an answer to the question video (S1228). Based on the acquired search information, a search of the wanted person is performed in the crime information database (S1230) and a list video showing wanted persons is sent to a police box terminal (S1232). When a "YES notification" is received from the police box terminal in response to the sent list video (S1234), the answer acquiring procedure (S300) described later is performed for acquiring an answer that selects one wanted person in the list video, who is a target (S1240). Then, information about the selected wanted person is recorded into the wanted person information report file (S1236). If a "NO notification" is received (S1236) or a predetermined time has passed (S1238), the procedure goes to Step S1258 and the wanted person information report creating procedure is terminated.
When a question item is neither the wanted person information (S1208) nor image information (1210), a question video corresponding to the question item is sent to the police box terminal (S1212) and the answer acquiring procedure (S300) described later is performed for acquiring an answer to that question video (S1214). When an answer video is acquired in the answer acquiring procedure, the acquired answer video is recorded into the wanted person information report file (S1216) and character-based information input on the police box terminal or obtained by speech recognition of the answer video is recorded into the wanted person information report file (S1218). When the question item is image information (S1210), the image acquiring procedure (S350) described later is performed (S1222). When an image acquired by the police box terminal is transferred, the transferred image is recorded into the wanted person information report file (S1224).
The above-described operations are repeated for each of the question items in the wanted person information report file (S1220). When answers to all of the question items are acquired, the wanted person information report file thus created is registered into the crime information database (S1244).
Then, information about a relevant department is acquired from an investigation record file in which the selected wanted person is registered and a terminal of the relevant department is called (S1246). When a notification that the terminal can respond is received from the relevant department's terminal (S1248), the relevant department's terminal is set in the reception table (S1250) and the police box terminal from which the wanted person information report is received is connected to the relevant department's terminal (S1252). In this manner, the relevant department set in the wanted person information report file can interview a person filing the wanted person information report by videophone so as to obtain further detailed information about that wanted person, thus facilitating rapid resolution of the case.
When an end notification is received from the relevant department's terminal (S1254), connection with the relevant department's terminal is disconnected (S1256), the reception table is reset (S1258), and the wanted person information report creating procedure is terminated.
When the relevant department's terminal does not respond in Step S1248 or when no one is found in the search result video sent in Step S1232, the procedure goes to Step S1258 without connecting the police box terminal to the relevant department's terminal, thereby terminating the wanted person information report creating procedure.
In the above-described preferred embodiment, the list video of wanted persons that are searched is presented so that the filing person can make selection. Alternatively, the wanted persons thus searched may be sequentially presented so as to allow the filing person to select a wanted person.

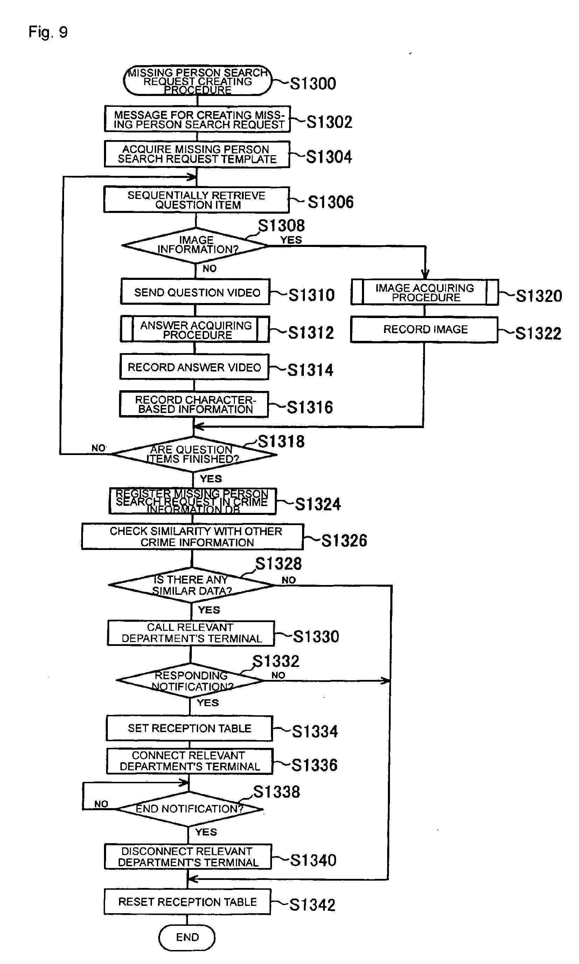

Fig. 9 shows a flow chart of the missing person search request creating procedure (S1300).
As shown in Fig. 9, first, a "Message for creating a missing person search request" (not shown) indicating that creation of a missing person search request begins is displayed (S1302). A template file for a missing person search request in which a question video is registered for each question item in the missing person search request is acquired from the reception database (S1304). The question items are sequentially retrieved from the acquired template file (S1306). When a question item is not image information (S1308), a question video corresponding to the question item is sent to the police box terminal (S1310) and the answer acquiring procedure (S300) described later is performed for acquiring an answer to that question video (S1312). When an answer video is acquired in the answer acquiring procedure, the acquired answer video is recorded into the missing person search request file (S1314) and character-based information input on the police box terminal or obtained by speech recognition of the answer video is recorded into the missing person search request file (S1316). When the question item is image information (S1308), the image acquiring procedure (S350) described later is performed (S1320). When an image acquired by the police box terminal is transferred, the transferred image is recorded into the missing person search request file (S1322).
The above-described operations are repeated for each of the question items in the missing person search request file (S1318). When answers to all of the question items are acquired, the missing person search request file thus created is registered into the crime information database (S1324).
Then, the missing person search request file thus created is compared with crime information files already registered in the crime information database (S1326). If similar data is found (S1328), information about a relevant department that is set in the similar crime information file is acquired and a terminal of the relevant department is called (S1330). When a notification that the terminal can respond is received from the relevant department's terminal (S1332), the relevant department's terminal is set in the reception table (S1334) and the police box terminal from which the missing person search request is accepted is connected to the relevant department's terminal (S1336). In this manner, the relevant department set in the crime information file can interview a person filing the missing person search request by videophone so as to obtain further detailed information about a case, thus facilitating rapid resolution of the case.
When an end notification is received from the relevant department's terminal (S1338), connection with the relevant department's terminal is disconnected (S1340), the reception table is reset (S1342), and the missing person search request creating procedure is terminated.
When no similar data is found in Step S1328 or the relevant department's terminal does not respond in Step S1332, the procedure goes to Step S1342 without connecting the police box terminal to the relevant department's terminal, thereby terminating the missing person search request creating procedure.

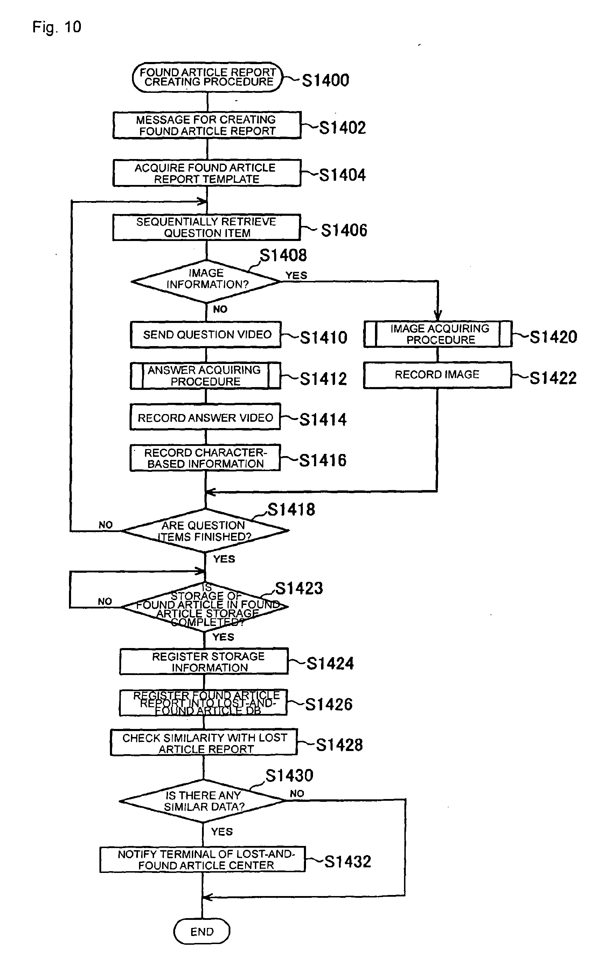

Fig. 10 shows a flow chart of the found article report creating procedure (S1400).
As shown in Fig. 10, first, a "Message for creating a found article report" (not shown) indicating that creation of a found article report begins is displayed (S1402). Then, a template file for a found article report in which a question video is registered for each of question items in the found article report is acquired from the reception database (S1404) and the question items are sequentially retrieved from the acquired template file (S1406). When a question item is not image information (S1408), a question video corresponding to the question item is sent to the police box terminal (S1410) and the answer acquiring procedure (S300) described later is performed for acquiring an answer to that question video (S1412). When an answer video is acquired in the answer acquiring procedure, the acquired answer video is recorded into the found article report file (S1414) and character-based information input on the police box terminal or obtained by speech recognition of the answer video is also recorded into the found article report file (S1416). When the question item is image information (S1408), the image acquiring procedure (S350) described later is performed (S1420). When an image taken by the found article imaging camera 16 in the police box terminal is transferred, the transferred image is recorded into the found article report file (S1422).
The above-described operations are repeated for each of the question items in the found article report file (S1418). When answers to all of the question items are acquired, it is checked that the found article tray 15 with the found article accommodated therein is stored in the found article storage 17 in the police box terminal (S1423), then that police box or a patrolling police officer who has jurisdiction over that police box is registered into the storage information field of the found article report file (S1424). The found article report file thus created is registered into the lost-and-found article database (S1426).
Then, the found article report file thus created is compared with lost article report files already registered in the lost-and-found article database (S1428). If similar data is found (S1430), the lost-and-found article center's terminal 320 (or a police box terminal in a police box in which the lost article report was filed or a mobile terminal of a patrolling police officer who has jurisdiction of that police box) is notified (S1432), and the found article report creating procedure is terminated. In this manner, it is possible to rapidly inform a person filing the lost article report that an article similar to a lost article is found and reported.
In addition, when similar data is found, the lost-and-found article center's terminal 320 may be called and connected. In this case, an arrangement to return the found article can be rapidly performed.
The found article stored in the found article storage 17 in the police box is transferred to the lost-and-found article center 300 so as to be kept in the lost-and-found article storage 330, after a predetermined period of time. When the found article is accommodated in the lost-and-found article storage of the lost-and-found article center, an officer of that center calls the reception server 110 from the lost-and-found article center's terminal 320 so as to open a found article report corresponding to that found article and update the storage information field on the opened found article report to the lost-and-found article center (not shown).

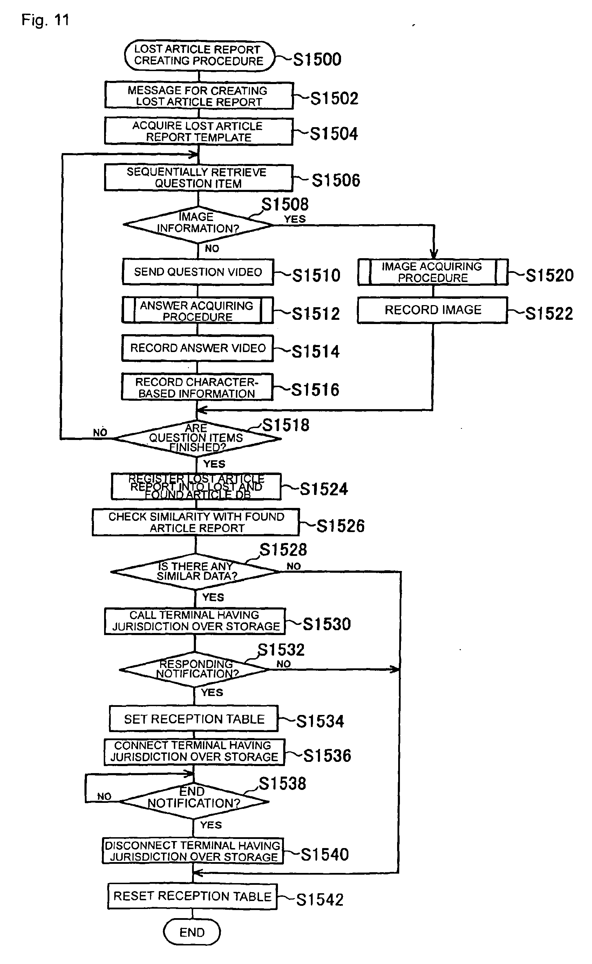

Fig. 11 shows a flow chart of the lost article report creating procedure (S1500).
As shown in Fig. 11, first, a "Message for creating a lost article report" (not shown) indicating that creation of a lost article report begins is displayed (S1502). A template file for a lost article report in which a question video is registered for each of question items in the lost article report is acquired from the reception database (S1504) and the question items are sequentially retrieved from the acquired template file (S1506). When a question item is not image information (S1508), a question video corresponding to the question item is sent to the police box terminal (S1510) and the answer acquiring procedure (S300) described later is performed for acquiring an answer to the question video (S1512). When an answer video is acquired in the answer acquiring procedure, the acquired answer video is recorded into the lost article report file (S1514) and character-based information input on the police box terminal or obtained by speech recognition of the answer video is also recorded in the lost article report file (S1516). When the question item is image information (S1508), the image acquiring procedure (S350) described later is performed (S1520). When an image taken by a person filing the lost article report with a digital camera, a mobile phone or other device or a sketch drawn with a drawing application is transferred, the transferred image or sketch is recorded into the lost article report file (S1522).
The above-described operations are repeated for each of the question items in the lost article report file (S1518). When answers to all of the question items are acquired, the lost article report file thus created is registered into the lost-and-found article database (S1524).
Then, the lost article report file thus created is compared with found article report files already registered in the lost-and-found article database (S1526). If similar data is found (S1528), information about a storage is acquired from the storage information field of the found article report file that is similar, and a jurisdiction terminal of the storage is called (S1530) (when the found article is stored in the found article storage 17 in a police box, the jurisdiction terminal is a police box terminal of that police box or a mobile terminal of a patrolling police officer having jurisdiction over that police box, and when a found article is transferred to the lost-and-found article storage 330 in the lost-and-found article center, the jurisdiction terminal is the lost-and-found article center's terminal 320). When a notification that the terminal can respond is received from the jurisdiction terminal in the storage (S1532), the jurisdiction terminal is set in the reception table (S1534) and the police box terminal from which the lost article report is accepted is connected to the jurisdiction terminal (S1536). Therefore, a person filing the lost article report can interview an officer of the storage where the found article is stored by videophone so as to confirm an image of that found article and arrange for the return of the found article, for example, thus facilitating rapid handover of that lost and found article.
When an end notification is received from the jurisdiction terminal of the storage (S1538), connection with the jurisdiction terminal is disconnected (1540) the reception table is reset (S1542), and the lost article report creating procedure is terminated.
When no similar data is found in Step S1528 or when the jurisdiction terminal of the storage does not respond in Step S1532, the procedure goes to Step S1542 without connecting the police box terminal to the jurisdiction terminal, thereby terminating the lost article report creating procedure.

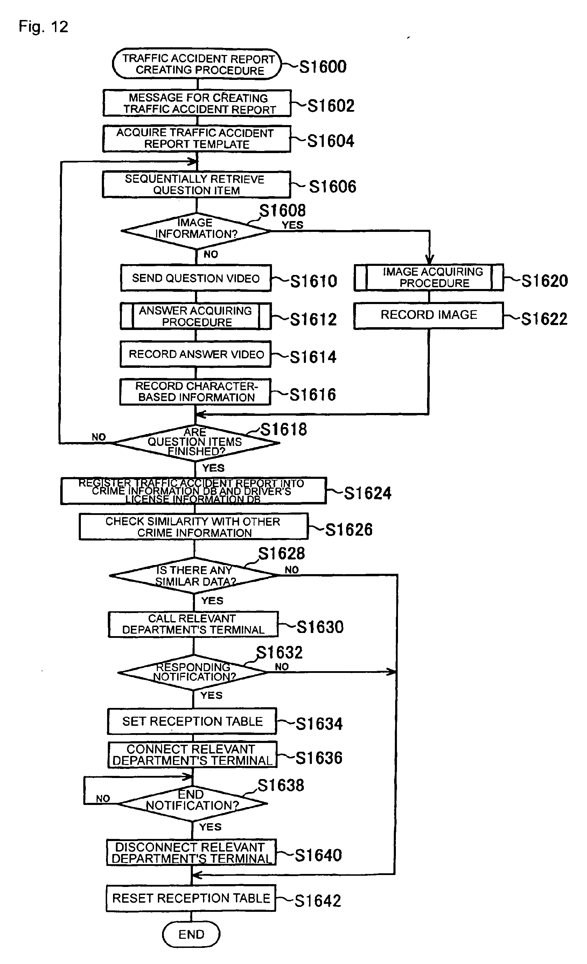

Fig. 12 shows a flow chart of the traffic accident report creating procedure (S1600).
As shown in Fig. 12, first, a "Message for creating a traffic accident report" (not shown) indicating that creation of a traffic accident report begins is displayed (S1602). Then, a template file for a traffic accident report in which a question video is registered for each of question items in the traffic accident report is acquired from the reception database (S1604) and the question items are sequentially retrieved from the acquired template file (S1606). When a question item is not image information (S1608), a question video corresponding to the question item is sent to the police box terminal (S1610) and the answer acquiring procedure (S300) described later is performed for acquiring an answer to the question video (S1612). When an answer video is acquired in the answer acquiring procedure, the acquired answer video is recorded into the traffic accident report file (S1614) and character-based information input on the police box terminal or obtained by speech recognition of the answer video is also recorded into the traffic accident report file (S1616). When the question item is image information (S1608), the image acquiring procedure (S350) described later is performed (S1620). When an image acquired by the police box terminal is transferred, the transferred image is recorded into the traffic accident report file (S1622).
The above-described operations are repeated for each of the question items in the traffic accident report file (S1618). When answers to all of the question items are acquired, the traffic accident report file thus created is registered into the crime information database and the driver's license information database (S1624).
Then, the traffic accident report file thus created is compared with crime information files already registered in the crime information database (S1626). If similar data is found (S1628), information about a relevant department set in the crime information file is acquired and a terminal of the relevant department is called (S1630). When a notification that the terminal can respond is received from the relevant department's terminal (S1632), the relevant department's terminal is set in the reception table (S1634) and the police box terminal from which the traffic accident report is accepted is connected to the relevant department's terminal (S1636). In this manner, the relevant department set in the crime information file can interview a person filing the traffic accident report by videophone so as to obtain further detailed information about a case, thus facilitating rapid resolution of the case.
When an end notification is received from the relevant department's terminal (S1638), connection with the relevant department's terminal is disconnected (S1640), the reception table is reset (S1642), and the traffic accident report creating procedure is terminated.
When no similar data is found in Step S1628 or when the relevant department's terminal does not respond in Step S1632, the procedure goes to Step S1642 without connecting the police box terminal to the relevant department's terminal, thereby terminating the traffic accident report creating procedure.

The aforementioned comparison between the investigation record files is performed by extracting a keyword from character-based information fields for each of investigation items and comparing the extracted keywords with each other so as to determine similarity.
For example, in the case of comparison between crime information files, a filing person and an assailant in the damage report, a filing person and a victim and an assailant in an incident information report, a wanted person in the wanted person information report, a filing person and a missing person in a missing person search request, a filing person and the other party in a traffic accident report and other information are compared with each other. If names are the same, it is determined that compared files are similar to each other. If names are different, it is determined that the compared files are similar to each other when a certain level of similarity is found in other information, e.g., age, sex, height, weight, clothes, and other features. Moreover, it is also determined that the compared files are similar to each other when a certain level of similarity is found in the respective items related to the damage. In this manner, keywords are extracted from the character-based information fields and are compared with each other, thereby determining similarity. Thus, when the answer video is obtained as a sentence from a voice, even if all words are not precisely converted into characters by speech recognition, it is possible to determine similarity. In addition, in the case where face images are registered in both the compared investigation report files, biometric information is extracted from each of the face images. When both the extracted biometric information is similar to each other, it is determined that the compared files are similar to each other. When a lost article report file and a found article report file are compared with each other, it is determined that they are similar to each other when a certain level of similarity is found in various kinds of information, e.g., an article name, outer dimensions, a weight, an outer color, and contents. When an image is registered for a lost article, features are extracted from both the images. When the extracted features are similar to each other, it is then determined that the lost article report file and the found article report file that are compared are similar to each other.

In the above preferred embodiment, an example is described in which there is a single relevant department. When a plurality of relevant departments are set in a single investigation record file or when a plurality of similar investigation record files are found by comparison between investigation record files, terminals of those relevant departments may be called and a videoconference may be conducted with the terminals each of which notifies that it can respond.
In the above-described preferred embodiment, the description assumes that, when a similar investigation record file is found, a relevant department set in the found investigation record file is called and connected. Alternatively, the terminal of the relevant department may merely be notified. Moreover, information for referring to the created investigation record file or summary of the created investigation record file may be registered into the found investigation record file as supplemental information.

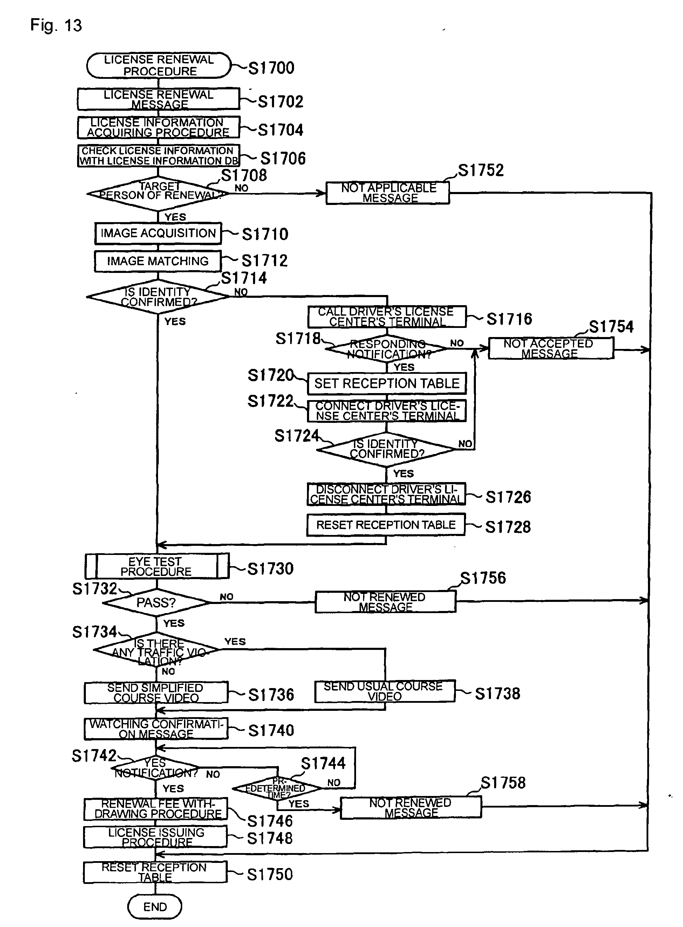

Fig. 13 shows a flow chart of the license renewal procedure (S1700).
As shown in Fig. 13, first, a "License renewal message" (not shown) indicating that a process for renewing a license begins is displayed (S1702). Then, license information is acquired from a police box terminal (S1704). The license information can be input from the police box terminal by using the remote controller 13. Alternatively, a reader for reading information on a license may be connected to the police box terminal so as to allow automatic input of the license information when a license brought by a visitor is set in the reader.
The acquired license information is checked against the driver's license information database (S1706). When it is confirmed that the visitor is a target of license renewal (S1708), a visitor's image is acquired from a video on the videophone (S1710) and is checked against the driver's license information database (S1712). When the identity is confirmed (S1714), an eye test is performed for the visitor by using a video on the videophone (S1730). If the visitor passes the eye test (S1732), a record of traffic violations is checked in the driver's license information database (S1734). When no violation is found since the previous renewal, "Course video for simplified renewal" is sent to the police box terminal (S1736). When there is a violation since the previous renewal, "Course video for usual renewal" is sent to the police box terminal (S1738). After the course video is sent, a "Watching confirmation message" (not shown) is displayed (S1740). When a "YES notification" is received in response to that message (S1742), a process for automatically withdrawing a renewal fee from an account that is specified in advance (S1746) is performed. When withdrawal is confirmed, a process for issuing a license is performed (S1748), the reception table is reset (S1750), and then the license renewal procedure is terminated.
When the identity cannot be confirmed in Step S1714, a driver's license center's terminal 420 is called (S1716). When a notification that the terminal can respond is received (S1718), the driver's license center's terminal 420 is set in the reception table (S1720), the police box terminal from which the license renewal is accepted is connected to the driver's license center's terminal by videophone, and an officer of the driver's license center can confirm the identity of the visitor (S1724). When the identity is confirmed, connection with the driver's license center's terminal is disconnected (S1726), the reception table is reset (S1728), and the procedure goes to Step S1730.
When it is determined that the visitor is not a target of renewal in Step S1708, a "Not applicable message" (not shown) is displayed (S1752). When no response is received in Step S1718 or when the identity cannot be confirmed in Step S1724, a "Not accepted message" (not shown) indicating that fact is displayed (S1754). When the visitor fails the eye test in Step S1732, a "Not renewed message" (not shown) indicating that fact is displayed (S1756). When an answer that the visitor watches the course video for renewal is not received within a predetermined time in Step S1744, a "Not renewed message" indicating that fact is displayed (S1758) and the procedure goes to Step S1750, thereby terminating the license renewal procedure.

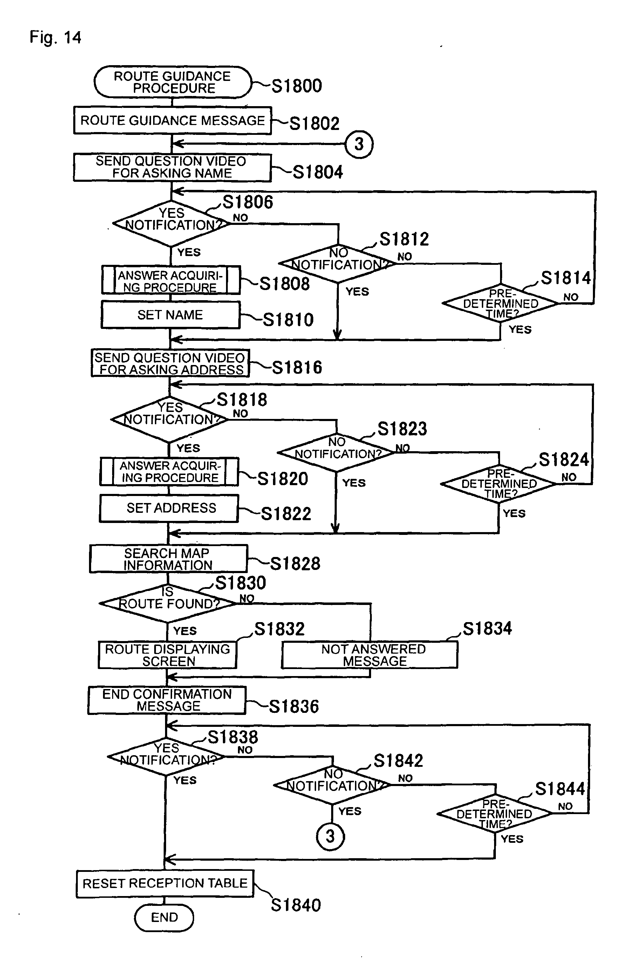

Fig. 14 shows a flow chart of the route guidance procedure (S1800).
As shown in Fig. 14, first, a "Route guidance message" (not shown) indicating that route guidance begins is sent (S1802) and a question video for asking a name is sent (S1804). When a "YES notification" is received in response to that question video (S1806), the answer acquiring procedure (S300) described later is performed (S1808) and a destination's name is set (S1810). When a "NO notification" is received (S1812) or a predetermined time has passed (S1814), the procedure goes to a next step.
Then, a question video for asking an address is sent (S1816). When a "YES notification" is received in response to that question video (S1818), the answer acquiring procedure (S300) described later is performed (S1820) and the address of the destination is set (S1822). When a "NO notification" is received (S1823) or a predetermined time has passed (S1824), the procedure goes to a next step.
Next, map information is searched in the reception database based on the acquired name and/or address of the destination (S1828). When a route from the police box to the destination is found (S1830), a route displaying screen is sent (S1832). When the route is not found, a "Not-answered message" (not shown) is displayed (S1834).
Then, a "Completion confirming message" (not shown) for asking a visitor if the route guidance can be terminated is displayed (S1836). When a "YES notification" is received (S1838), the reception table is reset (S1840) and the route guidance procedure is terminated. When a "NO notification" is received (S1842), the procedure goes back to Step S1804 to repeat the operations. When a predetermined time has passed (S1844), the procedure goes to Step S1840, thereby terminating the route guidance procedure.

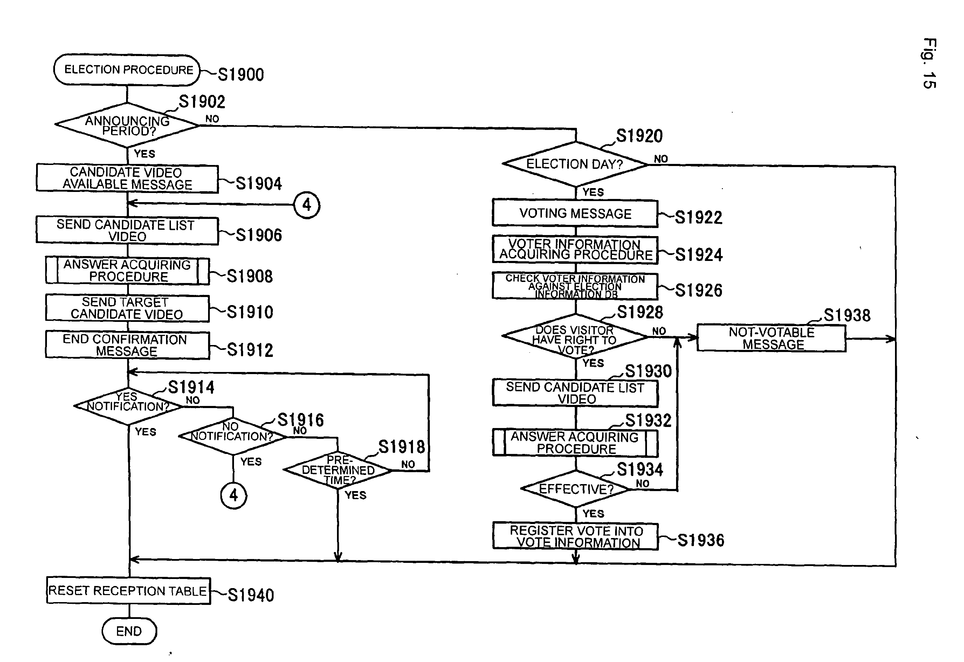

Fig. 15 shows a flow chart of the election procedure (S1900).
As shown in Fig. 15, during an announcing period for an election (S1902), a "Candidate video available message" (not shown) indicating that a visitor can watch a speech video of a candidate is displayed (S1904). Then, a candidate list video is acquired from candidate information in the election information database and is sent to the police box terminal (S1906). Then, the answer acquiring procedure (S300) described later is performed so as to select a candidate whose video is to be watched (S1908). A speech video of the selected candidate is acquired from the candidate information in the election information database and is sent to the police box terminal (S1910). Then, a "Watching completion confirmation message" (not shown) for asking the visitor if he/she is finished watching the candidate video is displayed (S1912). When a "YES notification" is received in response to that message (S1914), the reception table is reset (S1940) and then the election procedure is terminated. When a "NO notification" is received (S1916), the procedure goes back to Step S1906 to repeat the operations. When a predetermined time has passed, the procedure goes to Step S1940, thereby terminating the election procedure.
On an election day (S1920), a "Voting message" (not shown) indicating that a vote can be received (S1922) and a process for acquiring voter information from the police box terminal based on a voter's card distributed to a voter in advance is performed (S1924). The voter information may be acquired by inputting a code described on the voter's card from the police box terminal using the remote controller 13. Alternatively, a reader for reading information on the voter's card or another identification card may be connected to the police box terminal, so that voter information can be automatically input when the voter's card or the other identification card brought by the visitor is set in the reader.
The voter information thus read is checked against the election information database (S1926). When it is confirmed that the visitor has a right to vote (S1928), the candidate list video is acquired from the candidate information of the election information database and is sent (S1930), and the answer acquiring procedure (S300) described later is performed (S1932). When an effective answer is received (S1934), the answer is registered into vote information in the election information database (S1936). When it is determined that the visitor does not have a right to vote in Step S1928 or when it is determined that the acquired answer is not effective in Step S1934, a "Not-votable message" (not shown) indicating that voting via the police box terminal cannot be accepted is displayed (S1938), the procedure goes to Step S1940, thereby terminating the election procedure.
When it is determined that the visitor does not have a right to vote in Step S1928 or when it is determined that the acquired answer is not effective in Step S1934, an election administration center's terminal 520 may be called and connected automatically. In this case, even if a problem occurs in the police box terminal, the election administration center can make a decision and handle the problem in an appropriate manner.

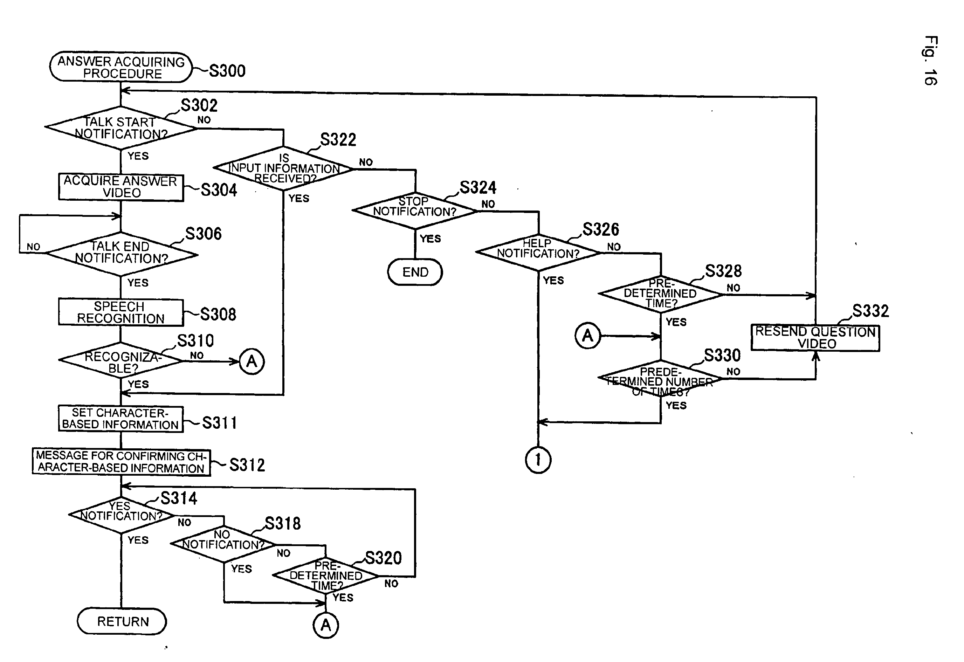

Fig. 16 shows a flow chart of the answer acquiring procedure (S300).
As shown in Fig. 16, when a "Talk start message" is received from a police box terminal (S302), an answer video is acquired (S304). When a "Talk end message" is received from the police box terminal (S306), audio of the acquired answer video is subjected to speech recognition (S308). When the audio is successfully recognized (S310), the result of the speech recognition is set in character-based information (S311). If character-based information is received (S322), the procedure goes to Step S311 and the received character-based information is set in the character-based information.
Then, a "Character-based information confirmation message" (not shown) for confirming the acquired character-based information is displayed (S312). When a "YES notification" is received in response to that message (S314), the procedure is returned to its original procedure. When a "NO notification" is received (S318) or a predetermined time has passed (S320), the procedure goes to Step S330 and a question video is resent so as to acquire the answer again.
When the speech recognition fails in Step S310, the procedure also goes to Step S330 and the question video is resent so as to acquire the answer again.
When a "Stop notification" is received (S324), the procedure is terminated. When a "Help notification" is received (S326), the procedure goes back to Step S210 in Fig. 4 and a reception terminal that can respond is called and connected. When any notification is not received within a predetermined time (S328), the question video is resent so as to acquire the answer again. If any notification is not received although the above operation is repeated a predetermined number of times (S330), the procedure goes back to Step S210 in Fig. 4 and a reception terminal that can respond is called and connected.

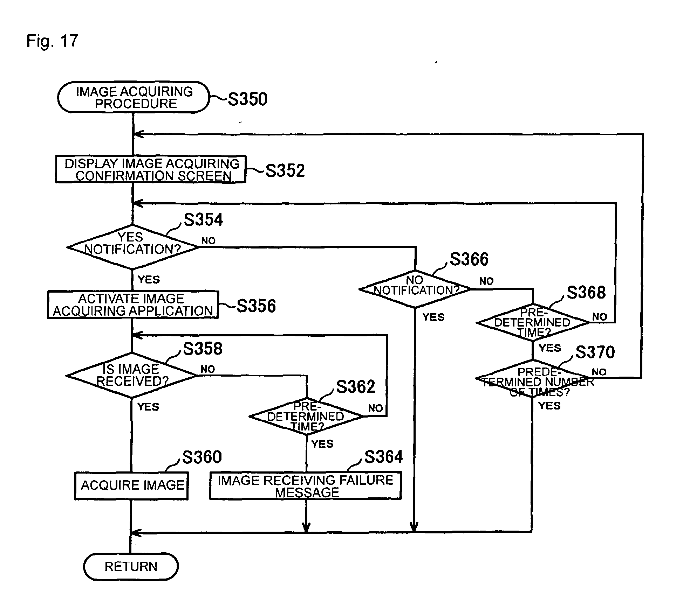

Fig. 17 shows a flow chart of the image acquiring procedure (S350).
As shown in Fig. 17, first, an "Image acquisition confirmation screen" (not shown) asking whether to acquire an image or not is displayed (S352). When a "YES notification" is received in response to that message, an image acquiring application for acquiring image data in a digital camera or a mobile phone brought by a visitor via infrared communication, Bluetooth (registered trademark) or other suitable communication and transferring the acquired image is activated on a police box terminal (S356). When image data is received (S358), the image is acquired (S360) and the procedure is returned to its original procedure. If no image data is received within a predetermined time (S362), an "Image receiving failure message" (not shown) is sent (S364) and the procedure is returned to its original procedure.
When a "NO notification" is received in response to a question video displayed in Step S352 (S366), the procedure is returned to its original procedure. When any notification is received within a predetermined time (S368), the procedure goes back to Step S352. If any notification is received although the above operation is repeated a predetermined number of times (S370), the procedure is returned to its original procedure.
In the description above, image data in a digital camera or a mobile phone is acquired and is recorded in an investigation record file. However, the present system also includes a function of capturing a video on the videophone received by the automatic answering server 120 as a still image and recording the still image as image data. Thus, when a found article report is created, it is possible to obtain an image of a found article by switching from a camera for a usual videophone to the found article imaging camera 16. Moreover, a camera for a videophone can be detached and attached from/to a police box terminal 32 installed on a street light or a police box terminal 42 installed on an expressway, as described above. Therefore, it is possible to acquire image data at a site by using that camera and record the acquired image data into an investigation record file. In addition, if an image of a victim or a site image is acquired by a camera of a mobile terminal of a patrolling police officer, the image data can be recorded into an investigation record or a daily log by using the automatic answering server 120.
Furthermore, a scanner may be connected to a police box terminal so as to provide a function of scanning and reading a still image. A function of acquiring not only a still image but also movie data and recording them into an investigation record file may be provided.

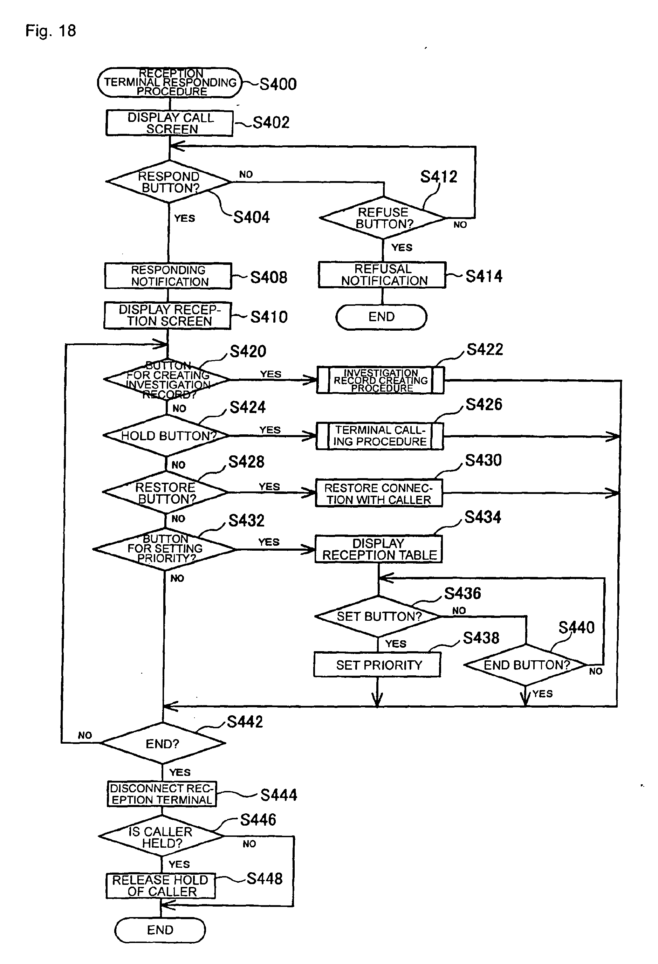

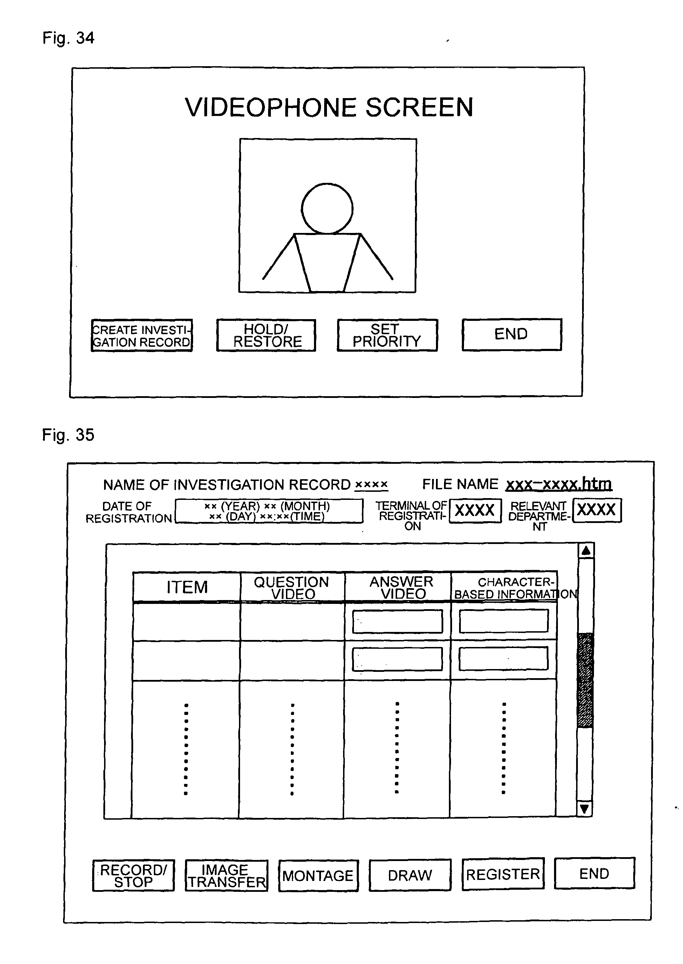

Fig. 18 shows a flowchart of a reception terminal answering procedure (S400) in the reception server 110 of the videophone police box system according to one preferred embodiment of the present invention.
When accepting a call from a police box terminal, the reception server 110 displays a "Call screen" (not shown) for informing that there is a call on a reception terminal (S402). If a "RESPOND" button is selected on a "Call screen" (S404), a "Responding notification" is sent (S408) and a "Reception screen" shown in Fig. 34 is displayed (S410). If a "REFUSE" button is selected (S412) on a "Call screen", a "Refusal notification" is sent (S414) and the procedure is terminated.
A "Reception screen" includes a "CREATE INVESTIGATION RECORD" button, a "HOLD/RESTORE" button, a "SET PRIORITY" button, and an "END" button, as well as a videophone screen in which a video image at the other end of the videophone is displayed.
When a "CREATE INVESTIGATION RECORD" button is selected (S420), an investigation record creating procedure described later is performed (S422), so that it is possible to create an investigation record file while interviewing the police box terminal by videophone, and to add and modify an existing investigation record file.
When a "HOLD" button is selected (S424), a terminal calling procedure described later is performed (S426) so as to maintain connection with the caller police box terminal and call and connect another police box terminal connected to the communication line.
When a "RESTORE" button is selected (S428), hold of the connection with the held police box terminal is released (S430) so as to return to a previous state.
When a "SET PRIORITY" button is selected (S432), the reception table is displayed (S434). Then, when a "SET" button is selected (S436), a priority input on the screen is set in the reception table (S438) and the procedure goes to Step S442. When an "END" button is selected (S440), the procedure goes to Step S442 without setting priority in the reception table.
When the "END" button is selected on the "Reception screen" (S442), connection with the reception terminal is disconnected (S444). Then, when the caller police box terminal is held (S446), hold of the connection with the caller police box terminal is released (S448), and the reception terminal answering procedure is terminated.

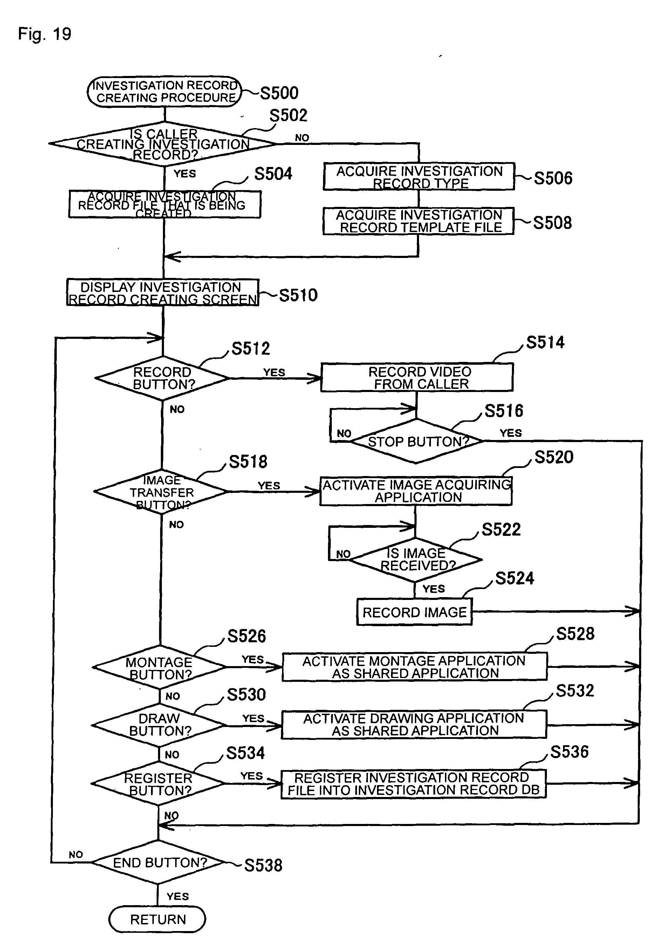

Fig. 19 shows a flow chart of the investigation record creating procedure by a reception terminal (S500) in the reception server 110 of the videophone police box system according to one preferred embodiment of the present invention.
As shown in Fig. 19, when a caller is creating an investigation record (S502), an investigation record file that is being created is acquired (S504). When the caller has not created the investigation record yet, a type of the investigation record is acquired (S506), a template file for the investigation record of the specified type is acquired from the reception database (S508), and an "investigation record creation screen", as shown in Fig. 35, is displayed (S510).
On an "investigation record creating screen" an investigation record file is displayed. In the displayed investigation record file, a registration date, a registration terminal, and a relevant department can be set, video or image information can be recorded into an answer video field, and character-based information can be written in a character-based information field. The "investigation record creation screen" includes a "RECORD/STOP" button, a "IMAGE TRANSFER" button, a "MONTAGE" button, a "DRAW" button, a "REGISTER" button, and a "END" button.
When the "RECORD" button is selected on the "Investigation record creation screen" (S512), a video from the caller is recorded into a selected answer video field in the investigation record file (S514). Recording is stopped when the "STOP" button is selected (S516).
When the "IMAGE TRANSFER" button is selected (S518), an image acquiring application is activated on the caller terminal (S520). When an image is received (S522), the received image is recorded into the selected answer video field in the investigation record file (S524).
When the "MONTAGE" button is selected (S526), a montage application is activated as a shared application with the caller terminal (S528). The montage application creates a montage by selecting an image of a portion of a face such as eyes, a nose, and a mouth and arranging it with a specified size. Thus, the reception terminal can create the montage on a shared screen while consulting with the caller by videophone. When the montage is completed, it is recorded into the selected answer video field in the investigation record file by selecting the "RECORD" button.
When the "DRAW" button is selected (S530), a drawing application is activated as a shared application with the caller terminal (S532). The drawing application is a so-called paint software that allows the reception terminal to draw a situation at a site on a shared screen while talking with the caller by videophone. When the "RECORD" button is pressed after the drawing is completed, a drawn image is recorded into the selected answer video field in the investigation record file.
When the "REGISTER" button is selected (S542), the investigation record file thus created is registered into the investigation record database (S536).
When "END" button is selected (S538), the procedure is returned to its original procedure.
The aforementioned registration in the relevant department field of the investigation record file is achieved by inputting a relevant department's name in the relevant department field on the investigation record creation screen displayed in this procedure and then selecting the "REGISTER" button.
In the above-described preferred embodiment, the relevant department's name is set in the relevant department field of the investigation record file and the terminal of the relevant department is called by referring to the address table. Alternatively, the address of the relevant department's terminal may be directly set in the relevant department field.

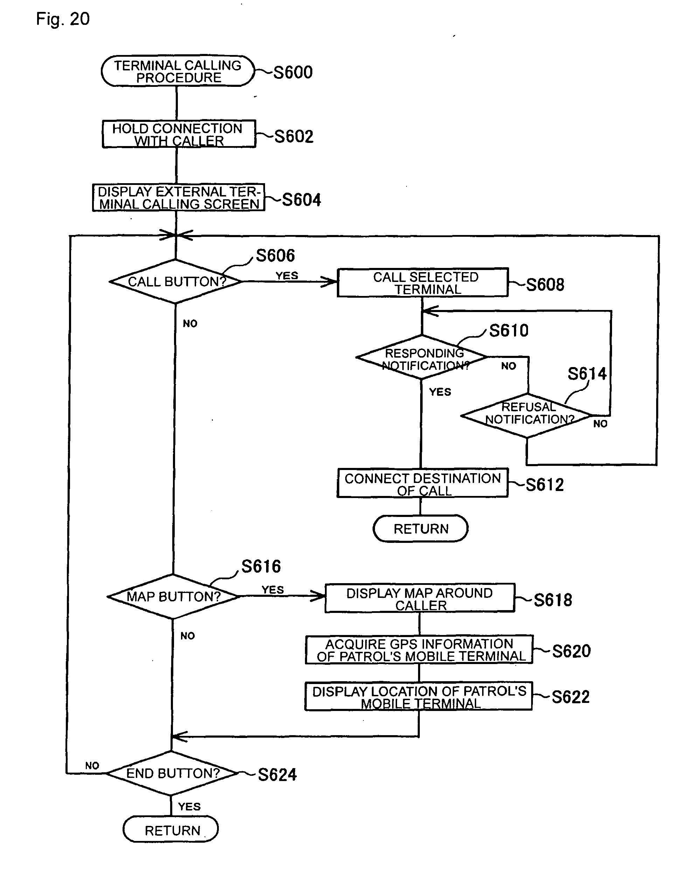

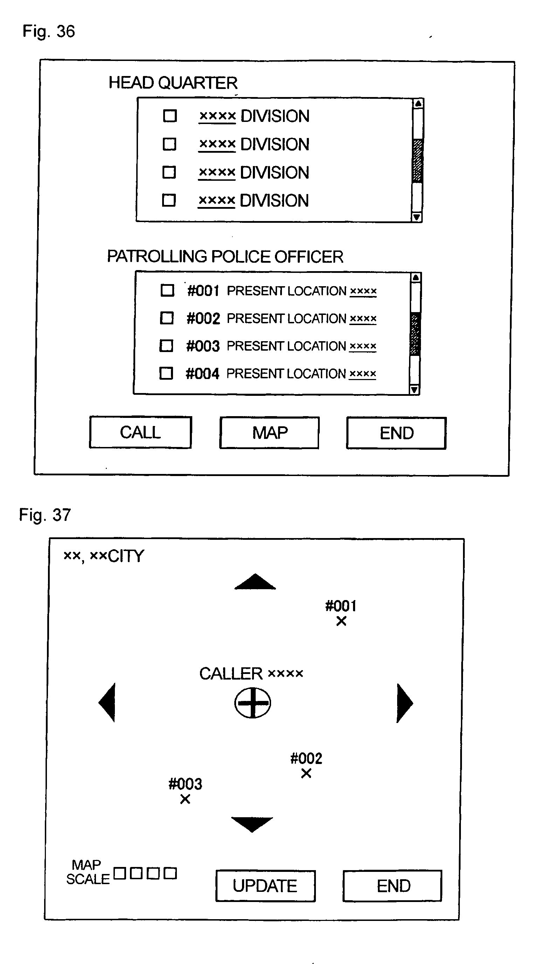

Fig. 20 shows a flowchart of a terminal calling procedure from a reception terminal (S600) in the reception server 110 of the videophone police box system according to one preferred embodiment of the present invention.
As shown in Fig. 20, connection with a caller is held (S602) and an "External terminal calling screen", shown in Fig. 36, is displayed (S604).
A destination list including a headquarters and/or a patrolling police officer is displayed on the "External terminal calling screen". When a destination is specified and a "CALL" button is selected, the specified destination can be called. Moreover, when a "MAP" button is selected, a "Screen for confirming present location of patrolling officer", shown in Fig. 37, is displayed so as to allow a present location of a patrolling police officer to be confirmed. Thus, it is possible to call the nearest patrolling police officer and prompt him/her rush to the caller.
When the "CALL" button is selected on the "External terminal calling screen" (S606), a terminal of the selected destination is called (S608). When a "Responding notification" is received (S610), the terminal of the destination is connected (S612) and the procedure is returned to its original procedure. When a "Refusal notification" is received (S614), the procedure goes back to Step S606 to re-select another destination.
When the "MAP" button is selected (S616), a map around the caller is displayed as a "Screen for confirming present location of patrolling officer" (S618), GPS information is acquired from mobile terminals of patrolling police officers (S620), and a present location of the patrolling police officer is displayed on the displayed map (S622).
When the "END" button is selected (S624), the procedure is returned to its original procedure.
Moreover, on the "Screen for confirming present location of patrolling officer", when a displayed patrolling police officer is selected, the procedure goes to Step S608 where a mobile terminal of the selected patrolling police officer can be called and connected. When an "UPDATE" button is selected, the procedure goes back to Step S620 so as to update the present location of the patrolling police officer. When the "END" button is selected, the "Screen for confirming present location of patrolling officer" is terminated.

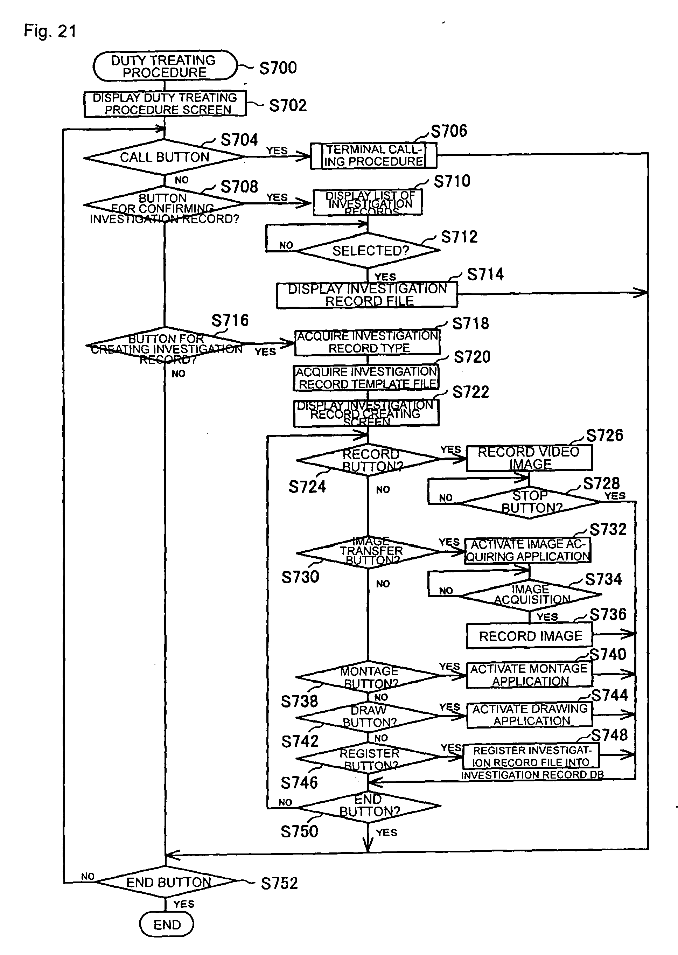

Fig. 21 shows a flow of a task operating procedure (S700) by a reception terminal in the reception server 110 of the videophone police box system according to one preferred embodiment of the present invention.
As shown in Fig. 21, first, a "Task operating procedure screen" (not shown) for performing the task operating procedure is displayed (S702). The "Task operating procedure screen" includes a "CALL" button, a "CONFIRM INVESTIGATION RECORD" button, a "CREATE INVESTIGATION RECORD" button, and an "END" button.
When the "CALL" button is selected on the "Task operating procedure screen" (S704), the terminal calling procedure is performed (S706).
When the "CREATE INVESTIGATION RECORD" button is selected (S708), a list of investigation records is retrieved from the investigation record database and is displayed (S710). When any investigation record file is selected (S712), the selected investigation record file is displayed (S714). In this manner, a reception terminal or the like can have a videoconference with another terminal while confirming the same investigation record file.
When the "CREATE INVESTIGATION RECORD" button is selected (S716), a type of an investigation record is acquired (S718), a template file of the investigation record of the specified type is acquired from the reception database (S720), and the "Investigation record creation screen", shown in Fig. 35, is displayed (S722). On the "Investigation record creation screen", when the "RECORD" button is selected (S724), a video on the videophone is recorded into the selected answer video field in an investigation record file (S726). Recording is stopped when the "STOP" button is selected (S728). When the "IMAGE TRANSFER" button is selected (S730), an image acquiring application is activated (S732). When the image is acquired (S724), it is recorded into the selected answer video field in the investigation record file (S736). When the "MONTAGE" button is selected (S738), a montage application is activated (S740). When the "DRAW" button is selected (S742), a drawing application is activated (S744). When the "REGISTER" button is selected (S746), the investigation record file thus created is registered into the investigation record database (S748). When the "END" button is selected (S750), the task operating procedure is terminated.
When the "END" button is selected on the "Task operating procedure screen" (S752), the task operating procedure is terminated.
By performing the above-described operations, it is possible to confirm contents of an investigation record file, create a new investigation record file, and make an addition and/or modification from a reception terminal, a department's terminal in each department of the headquarters, a mobile terminal of a patrolling police officer and other suitable terminals. Moreover, it is possible to dictate a daily log by using that function.
In addition, when that function is activated during a videoconference between terminals of relevant divisions, it is possible to have an investigation conference while confirming an investigation record file and is also possible to create an investigation record file and modify an existing investigation record file. In this case, the application for displaying the investigation record file, the montage application, and the drawing application are activated as shared applications by the terminals joining the videoconference.

In the above-described preferred embodiment, a video on the videophone received by the automatic answering server is recorded into an answer video field in an investigation record file. Alternatively, only audio of the video on the videophone may be recorded. In this case, the advantages of the present invention are also achieved.

In the above-described preferred embodiment, a method for transmitting information about an operation of the remote controller of the police box terminal to the reception server is not clearly described. The information about the operation of the remote controller may be converted into a PB signal so as to be transmitted as audio of the videophone to the automatic answering server that separates the PB signal and transmits it to the reception server. Alternatively, a communication application for transmitting the information about the operation of the remote controller to the reception server may be activated so as to directly transmit the information about the operation of the remote controller to the reception server. Moreover, character-based information can be input by displaying a tablet for inputting character-based information about a screen and using a selection key, or by using numeric keys as in a mobile phone.

In the above-described preferred embodiment, creation of an investigation record file is performed by connecting the automatic answering server to a police box terminal by videophone, sending a question video as a videophone image to the police box terminal, and recording a videophone image received from the police box terminal as an answer video into the investigation record file. However, except for when the police box terminal is connected to a reception terminal by videophone, the creation of the investigation record file may be entirely performed using a Web server function, and receiving and sending of the question video and the answer video may be performed by using JAVA (registered trademark) applet or other suitable function.
Moreover, menu selection in the case of a usual reception is performed using the automatic answering server in the above description. Alternatively, a Web server function of the reception server 110 may be used. In this case, a menu selection screen may be displayed by accessing a predetermined Web page with a Web browser from a police box terminal. The Web server acquires a menu item selected on that menu selection screen. In addition, as for displaying a message screen during creation of an investigation record or menu selection, a Web screen different from a screen of the videophone may be displayed and be acquired via a Web server.

In the above-described preferred embodiment, a case is described in which a reception server sets a destination in the reception table, thereby connecting the usual reception to the automatic answering server and connecting an emergency call to a reception terminal that can respond. Alternatively, the destination may be set in a gate keeper of the videophone system so as to connect with the police box terminal.

### INDUSTRIAL APPLICABILITY

As described above, according to the present invention, a police box terminal having a videophone function that is installed in a police box, a public telephone booth, a street light, an emergency telephone booth on an expressway, or other suitable location, is connected to a videophone reception center, a crime information center, a lost-and-found article center, a driver's license center, an election administration center, a mobile videophone terminal of a patrolling police officer, videophone terminals of respective departments of a headquarter and the like via a communication line. An emergency call and a usual reception are separated from each other in a reception server of the videophone reception center. The usual reception is connected to an automatic answering server, so that creation of an investigation record and the like is automatically performed. Usually, only the emergency call is connected to a reception terminal of the videophone reception center. Thus, a videophone police box system is provided that appropriately deals with calls from a large number of citizens by only a small number of officers in the videophone reception center.
It should be noted that the present invention is not limited to the aforementioned preferred embodiments. As long as the effects of the present invention can be achieved, a component described in each embodiment can be appropriately changed, a new component can be added, or a portion of the components can be deleted.

## Claims

1. A videophone police box system for connecting a police box terminal that is installed in a police box with a videophone function to a reception terminal that is installed in a headquarters with a videophone function via a communication line to allow a visitor to the police box to remotely consult with a police officer in the headquarters, the videophone police box system comprising:
a reception unit that receives a call from the police box terminal; and
an automatic investigation record creating unit that includes an investigation record file in which a question video is recorded for each investigation item in an investigation record created by a police officer, that is connected to the police box terminal accepted by the reception unit, and that includes:
a function of sequentially retrieving the question video in accordance with an investigation item from the investigation record file and sending the question video to the connected police box terminal; and
a function of acquiring an answer video responsive to the sent video from the connected police box terminal and recording the answer video into the investigation record file to correspond to the investigation item; wherein
the reception unit connects the police box terminal from which the call is accepted to the automatic investigation record creating unit when accepting a usual call from the police box terminal; and
the reception unit connects the police box terminal from which the call is accepted to a reception terminal capable of responding when accepting an emergency call from the police box terminal.

2. The videophone police box system according to claim 1, wherein:
the investigation record file includes a relevant department field in which information about a relevant department that is relevant to each investigation record file is set, and a character-based information field in which character-based information is registered for each investigation item;
the reception unit includes a function of accepting an access to an investigation record file from the reception terminal or a relevant department's terminal connected via the communication line and setting information about a relevant department that is relevant to the investigation record file into the relevant department field of the investigation record file; and
the automatic investigation record creating unit includes:
a function of converting audio of the answer video from the connected police box terminal into character-based information by speech recognition;
a function of recording the converted character-based information into a character-based information field for a corresponding investigation item; and
a function of, in the case where an investigation record file satisfying a predetermined condition for correspondence is extracted by comparing character-based information recorded in a character-based information field of a new investigation record file with character-based information recorded in a character-based information field of investigation record files already registered when the new investigation record is registered, calling and connecting a relevant department's terminal based on information set in a relevant department field of the extracted investigation record file.

3. The videophone police box system according to claim 2, wherein the automatic investigation record creating unit includes a function of acquiring character-based information input via the police box terminal and includes a function of, when character-based information is acquired in response to the sent question video, recording the acquired character-based information into a character-based information field for a corresponding investigation item.

4. The videophone police box system according to claim 2, wherein the automatic investigation record creating unit includes:
a function of activating an image acquiring application that acquires an image from one of a digital camera, a mobile phone, and other suitable devices brought by a visitor at a police box terminal and transfers the image;
a function of recording the image transferred from the police box terminal by the image acquiring application into the investigation record file; and
a function of calling and connecting a relevant department's terminal based on information set in a relevant department field of the extracted investigation record file in the case where an investigation record file satisfying a predetermined condition for correspondence is extracted by comparing an image recorded in a new investigation record file with an image recorded in investigation record files already registered when the new investigation record is registered.

5. The videophone police box system according to claim 2, wherein the automatic investigation record creating unit includes:
a function of capturing a video image from the police box terminal as a still image;
a function of recording the captured image into the investigation record file; and
a function of, in the case where an investigation record file satisfying a predetermined condition for correspondence is extracted by comparing an image recorded in a new investigation record file with an image recorded in investigation record files already registered when the new investigation record file is registered, calling and connecting a relevant department's terminal based on information set in a relevant department field of the extracted investigation record file.

6. The videophone police box system according to any of claims 2 to 5, wherein the reception unit includes a function of accepting a call from the police box terminal that is creating an investigation record file by the automatic investigation record creating unit and connecting the police box terminal to a reception terminal capable of responding.

7. The videophone police box system according to any of claims 2 to 5, wherein:
the reception unit includes a reception table in which a police box terminal from which a call is accepted and a reception terminal that is connected to the police box terminal are registered, and includes a function of, when accepting a call from a police box terminal, referring to the reception table and connecting the police box terminal from which the call is accepted to any of the unconnected reception terminals in the case where there is an unconnected reception terminal;
the reception table includes a priority field in which priority of a registered police box terminal is set based on information from a reception terminal; and
the reception unit includes:
a function of, when accepting a call from a police box terminal, referring to the priority field in the reception table even if all reception terminals are connected, calling a reception terminal connected to a police box terminal having lower priority in the case where there is the police box terminal having the lower priority than that of the police box terminal from which the call is accepted, holding a connection with the police box terminal connected to the reception terminal from which the responding notification is received and switching the connection with that police box terminal into a connection with the police box terminal from which the call is accepted in the case where the responding notification is received from the called reception terminal; and
a function of, when an end notification is received from the reception terminal from which the responding notification is received, releasing the held connection with the police box terminal to recover the connection with the reception terminal.

8. The videophone police box system according to any of claims 2 to 5, wherein:
the automatic investigation record creating unit includes a function of automatically creating at least one of a damage report, an incident information report, a missing person search request, and a traffic accident report as the investigation record file and a function of registering the created investigation record file into a crime information database; and
the automatic investigation record creating unit further includes a function of calling and connecting a relevant department's terminal based on information set in a relevant department field in the investigation record file, when an investigation record file satisfying a predetermined condition for correspondence is extracted by comparing the created investigation record file with another investigation record file registered in the crime information database.

9. The videophone police box system according to any of claims 2 to 5, wherein:
the automatic investigation record creating unit includes:
a function of automatically creating a wanted person information report as the investigation record file wherein the function includes a function of acquiring search information for searching a wanted person, a function of extracting wanted person information from a crime information database based on the acquired search information and presenting the wanted person information thus extracted and a function of selecting a wanted person as an object from the wanted person information thus presented, and a function of registering the wanted person information report thus created into the crime information database; and
a function of calling and connecting a relevant department's terminal based on information set in a relevant department field of an investigation record file in which the selected wanted person is registered.

10. The videophone police box system according to any of claims 2 to 5, wherein
a found article imaging unit that takes an image of a found article that is brought and a found article storage unit arranged to store the found article are connected to the police box terminal;
the automatic investigation record creating unit includes:
a function of automatically creating a found article report as the investigation record file wherein the function includes a function of acquiring the image of the found article taken by the found article imaging unit and recording the acquired image into the investigation record file and a function of confirming that the found article is stored in the found article storage unit and recording storage information; and
a function of registering the found article report thus created into a lost-and-found article database;
the automatic investigation record creating unit includes a function of automatically creating a lost article report as the investigation record file and a function of registering the lost article report thus created into the lost-and-found article database; and
the automatic investigation record creating unit further includes:
a function of notifying a police box terminal accepting the lost article report or a mobile terminal of a police officer having jurisdiction over a police box accepting the lost article report or a terminal of the lost-and-found article center in the case where a lost article report satisfying a predetermined condition for correspondence is extracted by comparing the found article report thus created with lost article reports registered in the lost-and-found article database; and
a function of referring to storage information in the found article report, calling and connecting a jurisdiction terminal, in the case where a found article report satisfying a predetermined condition for correspondence is extracted by comparing the lost article report thus created with found article reports registered in the lost-and-found article database.

11. The videophone police box system according to claim 10, wherein:
the lost-and-found article center for managing a lost and found article is provided with a lost-and-found article storage unit arranged to store a found article brought from a police box; and
the reception unit includes a function of, when a found article stored in the found article storage unit in the police box is transferred into the lost-and-found article storage unit of the lost-and-found article center, updating storage information in the found article report registered in the lost-and-found article database to the lost-and-found article center.

12. The videophone police box system according to any of claims 2 to 5, wherein the automatic investigation record creating unit includes:
a function of acquiring license information of a visitor from a police box terminal;
a function of confirming that the visitor is a target person of renewal by checking the acquired license information against a license information database;
a function of acquiring an image of the visitor by capturing a video image on the police box terminal as a still image;
a function of confirming identity by checking the acquired image of the visitor against the license information database;
a function of performing an eye test by presenting an eye test chart on the police box terminal;
a function of sending a course video for license renewal to the police box terminal when it is confirmed that the visitor passes the eye test; and
a function of confirming that the sent course video is watched and issuing a license, thereby enabling license renewal to be performed from the police box terminal.

13. The videophone police box system according to claim 12, wherein the function of confirming identity includes a function of calling and connecting a terminal of a driver's license center when it is impossible to confirm identity based on the acquired image of the visitor, thereby enabling an officer of the driver's license center to confirm identity.

14. The videophone police box system according to any of claims 2 to 5, wherein the automatic investigation record creating unit includes:
a function of acquiring destination information including at least one of a location name and a name from a police box terminal;
a function of searching the acquired destination information in a map information database to acquire route information from the police box to the destination; and
a function of presenting the acquired route information about the police box terminal, thereby enabling the police box terminal to perform route guidance.

15. The videophone police box system according to any of claims 2 to 5, wherein the automatic investigation record creating unit includes:
a function of presenting a candidate list for an election to a police box terminal;
a function of making a candidate for which a speech video is to be watched be selected from the presented candidate list; a function of sending the speech video of the selected candidate to the police box terminal;
a function of acquiring voter information from the police box terminal;
a function of confirming a right to vote by checking the acquired voter information against a voter information database;
a function of accepting a vote from the police box terminal in the case where the right to vote is confirmed; and
a function of registering the accepted vote into a vote information database, thereby enabling an election to be performed through the police box terminal.

16. The videophone police box system according to any of claims 2 to 5, wherein the reception unit includes:
a function of opening an investigation record file from a reception terminal; and
a function of recording a video image received from the police box terminal into the opened investigation record file, while the reception terminal is connected to the police box terminal by videophone, thereby enabling an officer of the reception terminal to create the investigation record file while interviewing a visitor to the police box terminal by videophone.

17. The videophone police box system according to claim 16, wherein the reception unit further includes:
a function of activating an image acquiring application that acquires an image from one of a digital camera, a mobile phone, and other suitable devices brought by a visitor at a police box terminal and transfers the acquired image; and
a function of recording the transferred the image from the police box terminal by the activated image acquiring application into the investigation record file, thereby enabling an officer of the reception terminal to record image data provided by a visitor to the police box terminal into the investigation record file while interviewing the visitor by videophone.

18. The videophone police box system according to claim 16, wherein the reception unit further includes:
a function of capturing a video image from a police box terminal as a still image; and
a function of recording the captured image into the investigation record file, thereby enabling an officer of the reception terminal to record an image presented by a visitor to the police box terminal to a video camera into the investigation record file while interviewing the visitor by videophone.

19. The videophone police box system according to claim 16, wherein the reception unit further includes:
a function of activating a montage application for creating a montage by an operation from a terminal as a shared application among the reception terminal and the police box terminal; and
a function of recording an image created by the activated montage application into the investigation record file, thereby enabling an officer of the reception terminal to create a montage and record it into the investigation record file while interviewing a visitor to the police box terminal by videophone.

20. The videophone police box system according to claim 16, wherein the reception unit further includes:
a function of activating a drawing application that creates a drawing by an operation from a terminal as a shared application among the reception terminal and the police box terminal; and
a function of recording the drawing created by the activated drawing application into the investigation record file, thereby enabling an officer of the reception terminal to create drawing and record it into the investigation record file while interviewing a visitor to the police box terminal.

21. The videophone police box system according to any of claims 2 to 5, wherein the reception unit includes:
a function of displaying a list of connectable terminals; and
a function of calling and connecting one of the terminals that is selected from the displayed list, while a reception terminal is connected to a police box terminal by videophone.

22. The videophone police box system according to any of claims 2 to 5, wherein the reception unit includes:
a function of displaying a map around a police box from which the call is accepted;
a function of acquiring GPS information from a mobile terminal of a patrolling police officer;
a function of displaying a present location of the patrolling police officer on the map based on the acquired GPS information; and
a function of calling a mobile terminal of a patrolling officer who is selected from the displayed map on which the present location of the patrolling police officer is displayed and connecting that mobile terminal.

23. The videophone police box system according to any of claims 2 to 5, wherein the reception unit includes:
a function of accepting a call from a mobile phone of a patrolling police officer; and
a function of connecting the mobile phone from which the call is accepted to the automatic investigation record creating unit, thereby allowing the patrolling police officer to create an investigation record file at a site of a case.

24. The videophone police box system according to any of claims 2 to 5, wherein a videophone terminal installed in a public telephone booth includes a function of calling the reception unit, so that the videophone terminal installed in the public telephone booth functions as the police box terminal.

25. The videophone police box system according to any of claims 2 to 5, wherein the police box terminal is installed on a street light such that a video camera is detachable and attachable.

26. The videophone police box system according to any of claims 2 to 5, wherein the police box terminal is installed on an emergency telephone booth at a roadside such that a video camera is detachable and attachable.
